# FASCICULE DE BREVET EUROPEEN

(11) **EP 4 442 955 B1**
(45) Date de publication et mention de la délivrance du brevet: **08.10.2025**
(21) Numéro de dépôt: 24168506.4
(22) Date de dépôt: 04.04.2024
(51) Int. Cl.: E06B 9/17, E06B 9/42, E06B 9/70, H02S 20/22, H02S 30/20, H02S 40/38, H02S 50/00

(54) **PROCÉDÉ DE VÉRIFICATION DE COMPATIBILITÉ D'UN DISPOSITIF D'ENTRAÎNEMENT MOTORISÉ D'UN DISPOSITIF D'OCCULTATION POUR UNE INSTALLATION DE FERMETURE, D'OCCULTATION OU DE PROTECTION SOLAIRE**
VERFAHREN ZUR KOMPATIBILITÄTSPRÜFUNG EINER MOTORISCHEN ANTRIEBSVORRICHTUNG EINER VERDUNKELUNGSVORRICHTUNG FÜR EINE SCHLIESS-, VERDUNKELUNGS- ODER SONNENSCHUTZANLAGE
METHOD FOR CHECKING THE COMPATIBILITY OF A MOTORISED DRIVE DEVICE OF A SHADING DEVICE FOR A CLOSURE, SHADING OR SUN PROTECTION INSTALLATION

(30) Priorité: 05.04.2023 FR 2303401
(43) Date de publication de la demande: 09.10.2024
(73) Titulaire: Somfy Activites SA, 74300 Cluses (FR)
(72) Inventeur: ROUSSEAU, Fabien, 74300 Cluses (FR)
(74) Mandataire: Novaimo

(56) Documents cités:
- WO-A1-2020/188077

## Description

La présente invention concerne un procédé de vérification de compatibilité d'un dispositif d'entraînement motorisé d'un dispositif d'occultation pour une installation de fermeture, d'occultation ou de protection solaire, ainsi qu'un terminal mobile adapté à mettre en oeuvre ce procédé de vérification de compatibilité.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document WO 2020/188077 A1 qui décrit un procédé de vérification de compatibilité d'un dispositif d'entraînement motorisé d'un dispositif d'occultation pour une installation de fermeture, d'occultation ou de protection solaire, au moyen d'un terminal mobile. L'installation comprend un bâtiment, une fenêtre et le dispositif d'occultation. Le bâtiment comprend un mur. Le mur comprend une ouverture, une face extérieure et une face intérieure. La face extérieure du mur est orientée vers l'extérieur du bâtiment. La fenêtre est logée à l'intérieur de l'ouverture du mur. Le dispositif d'occultation comprend un coffre et un écran. Le coffre comprend une face supérieure, une face inférieure, un premier côté, un deuxième côté, une face avant et une face arrière. Le deuxième côté est opposé au premier côté selon une direction longitudinale du coffre. La face avant du coffre est orientée vers l'extérieur du bâtiment. L'écran est configuré pour être disposé en vis-à-vis de la fenêtre, de sorte à obturer partiellement ou complètement l'ouverture ménagée dans le mur. Ce procédé comprend une première étape de sélection d'un actionneur électromécanique, une deuxième étape de sélection d'un panneau photovoltaïque, une troisième étape de sélection d'une batterie, une première étape de détermination d'une localisation géographique de l'installation et une deuxième étape de détermination d'un masque solaire, au moyen du contrôleur du terminal mobile, pour un emplacement du panneau photovoltaïque par rapport à l'installation. Ce procédé comprend, en outre, une étape de vérification de compatibilité du dispositif d'entraînement motorisé, au cours de laquelle les première, deuxième et troisième étapes de sélection et les première et deuxième étapes de détermination sont exploitées. Ce procédé donne globalement satisfaction.

Cependant, ce procédé de vérification de compatibilité présente l'inconvénient de ne pas prendre en compte les conséquences d'une modification de la face extérieure du mur du bâtiment, lors d'une évaluation de la réhabilitation du bâtiment, notamment d'un point de vue énergétique.

La réhabilitation du bâtiment peut comprendre, d'une part, un remplacement ou une modification du ou des dispositifs d'occultation et, éventuellement, un remplacement de la ou des fenêtres. Le remplacement ou la modification du ou des dispositifs d'occultation est particulièrement avantageuse si le ou les dispositifs d'occultation intègrent chacun un dispositif d'entraînement motorisé comprenant un panneau photovoltaïque et une batterie pour alimenter en énergie électrique un actionneur électromécanique, puisqu'aucune modification du réseau électrique du bâtiment n'est à prévoir, par rapport à un cas où l'alimentation en énergie électrique du ou de chaque actionneur électromécanique serait mise en œuvre par le réseau d'alimentation électrique du secteur, en raison des travaux à réaliser sur le réseau électrique du bâtiment.

La réhabilitation du bâtiment peut comprendre, d'autre part, une modification de l'isolation thermique du bâtiment par l'intégration d'une isolation thermique extérieure au niveau de la face extérieure du mur du bâtiment, en la posant contre la face extérieure du mur du bâtiment. L'ajout de l'isolation thermique extérieure au niveau de la face extérieure du mur du bâtiment modifie l'épaisseur du mur du bâtiment, d'une valeur pouvant être, par exemple, de l'ordre de vingt centimètres. En outre, l'isolation thermique extérieure est posée contre la face extérieure du mur du bâtiment à la fin d'un chantier de réhabilitation du bâtiment.

La réhabilitation du bâtiment peut également comprendre l'ajout d'un balcon, d'une avancée ou d'un store d'extérieur contre la face extérieure du mur du bâtiment, pouvant être amovible par rapport au mur, pour limiter la pénétration de l'ensoleillement au travers de la fenêtre, notamment l'été, et, par conséquent, réduire un échauffement à l'intérieur du bâtiment.

Ainsi, le panneau photovoltaïque peut se retrouver en retrait par rapport à la face extérieure du mur du bâtiment, lorsque celui-ci est fixé sur le coffre du dispositif d'occultation.

De cette manière, le panneau photovoltaïque peut ne pas être exposé au rayonnement du soleil, pendant une partie ou tout au long d'une journée, à cause d'un ombrage formé par l'isolation thermique extérieure au niveau de la face extérieure du mur du bâtiment ou par le balcon, l'avancée ou le store d'extérieur disposé contre la face extérieure du mur du bâtiment.

Par conséquent, l'ajout de l'isolation thermique extérieure au niveau de la face extérieure du mur du bâtiment ou l'ajout du balcon, de l'avancée ou du store d'extérieur disposé contre la face extérieure du mur du bâtiment peut présenter un impact non-négligeable sur la performance énergétique du panneau photovoltaïque du dispositif d'entraînement motorisé.

La présente invention a pour but de résoudre les inconvénients précités et de proposer un procédé de vérification de compatibilité d'un dispositif d'entraînement motorisé d'un dispositif d'occultation pour une installation de fermeture, d'occultation ou de protection solaire, ainsi qu'un terminal mobile adapté à mettre en œuvre ce procédé de vérification de compatibilité, permettant de déterminer si le dispositif d'entraînement motorisé, équipé d'un panneau photovoltaïque et d'une batterie pour alimenter en énergie électrique un actionneur électromécanique, est considéré comme compatible ou non pour l'installation en raison d'une modification d'une face extérieure d'un mur d'un bâtiment, avant de démarrer un chantier de réhabilitation du bâtiment, notamment d'un point de vue énergétique.

A cet égard, la présente invention vise, selon un premier aspect, un procédé de vérification de compatibilité d'un dispositif d'entraînement motorisé d'un dispositif d'occultation pour une installation de fermeture, d'occultation ou de protection solaire,
l'installation comprenant au moins :
   - un bâtiment, le bâtiment comprenant au moins un mur, le mur comprenant au moins une ouverture, une face extérieure et une face intérieure, la face extérieure du mur étant orientée vers l'extérieur du bâtiment,
   - une fenêtre, la fenêtre étant logée à l'intérieur de l'ouverture du mur, et
   - le dispositif d'occultation,
le dispositif d'occultation comprenant au moins :
   - un coffre, le coffre comprenant une face supérieure, une face inférieure, un premier côté, un deuxième côté, une face avant et une face arrière, le deuxième côté étant opposé au premier côté selon une direction longitudinale du coffre, la face avant du coffre étant orientée vers l'extérieur du bâtiment, et
   - un écran, l'écran étant configuré pour être disposé en vis-à-vis de la fenêtre, de sorte à obturer partiellement ou complètement l'ouverture ménagée dans le mur,
le procédé étant mis en œuvre au moyen d'un terminal mobile et comprenant au moins :
   - une première étape de sélection d'un actionneur électromécanique,
   - une deuxième étape de sélection d'un panneau photovoltaïque,
   - une troisième étape de sélection d'une batterie, et
   - une première étape de détermination d'une localisation géographique de l'installation.

Selon l'invention, le procédé comprend, en outre, au moins :
- une deuxième étape de détermination d'un emplacement du panneau photovoltaïque par rapport à l'ouverture du mur du bâtiment et par rapport à la face extérieure du mur du bâtiment, la face extérieure du mur du bâtiment étant prévue pour intégrer ou recevoir une modification du bâtiment,
- une troisième étape de détermination d'un masque solaire, au moyen d'un contrôleur du terminal mobile, pour l'emplacement du panneau photovoltaïque par rapport à l'ouverture du mur du bâtiment, le masque solaire prenant en considération la modification du bâtiment, et
- une phase de vérification de compatibilité du dispositif d'entraînement motorisé, au cours de laquelle au moins les première, deuxième et troisième étapes de sélection et les première, deuxième et troisième étapes de détermination sont exploitées, la vérification de compatibilité du dispositif d'entraînement motorisé étant mise en œuvre en prenant en considération la modification du bâtiment.

En outre, suite à la phase de vérification,
- si le résultat de la vérification de compatibilité est positif, alors le procédé comprend une première étape d'information selon laquelle le dispositif d'entraînement motorisé est apte à être intégré et être mis en service dans l'installation avec la présence de la modification du bâtiment,
- tandis que, si le résultat de la vérification de compatibilité est négatif, alors le procédé comprend :
   - une deuxième étape d'information selon laquelle le panneau photovoltaïque est à déplacer par rapport à l'ouverture du mur du bâtiment, pour intégrer et mettre en service le dispositif d'entraînement motorisé dans l'installation avec la présence de la modification du bâtiment, ou
   - une troisième étape d'information selon laquelle le dispositif d'entraînement motorisé est considéré comme non compatible pour l'installation avec la présence de la modification du bâtiment ou une recharge de la batterie est à prévoir au cours de l'année, au moyen d'une source d'alimentation en énergie électrique externe, distincte du panneau photovoltaïque.

Ainsi, un tel procédé de vérification de compatibilité du dispositif d'entraînement motorisé permet de déterminer si le dispositif d'entraînement motorisé, équipé du panneau photovoltaïque et de la batterie pour alimenter en énergie électrique l'actionneur électromécanique, est considéré comme compatible ou non pour l'installation en raison d'une modification de la face extérieure du mur du bâtiment, avant de démarrer un chantier de réhabilitation du bâtiment, notamment d'un point de vue énergétique.

De cette manière, le procédé de vérification de compatibilité du dispositif d'entraînement motorisé permet de fournir un diagnostic concernant une possibilité ou non d'intégrer et de mettre en service le dispositif d'entraînement motorisé du dispositif d'occultation dans l'installation de fermeture, d'occultation ou de protection solaire en prenant en considération la modification de la face extérieure du mur du bâtiment.

En outre, un tel procédé de vérification de compatibilité est particulièrement intéressant dans le cadre d'une évaluation de la réhabilitation d'un bâtiment collectif comprenant un nombre important de dispositifs d'occultation. Néanmoins, ce procédé peut également être intéressant dans le cas d'un bâtiment individuel.

Selon une caractéristique avantageuse de l'invention, la modification du bâtiment est un ajout d'une isolation thermique extérieure au niveau de la face extérieure du mur du bâtiment, en la posant contre la face extérieure du mur du bâtiment, ou un ajout d'un balcon, d'une avancée ou d'un store d'extérieur contre la face extérieure du mur du bâtiment.

Selon une autre caractéristique avantageuse de l'invention, l'ouverture du mur comprend un côté supérieur, un côté inférieur, un premier côté latéral et un deuxième côté latéral. Le panneau photovoltaïque comprend un bord supérieur, un bord inférieur, un premier côté, un deuxième côté, une face avant et une face arrière, la face avant du panneau photovoltaïque étant orientée vers l'extérieur du bâtiment.

En outre, la deuxième étape de détermination comprend au moins :
- une première sous-étape de sélection de l'emplacement du panneau photovoltaïque à proximité du premier côté ou du deuxième côté du coffre,
- une première sous-étape d'entrée d'une première distance du bord supérieur du panneau photovoltaïque par rapport au côté supérieur de l'ouverture du mur,
- une deuxième sous-étape d'entrée d'une deuxième distance du premier côté ou du deuxième côté du panneau photovoltaïque par rapport au premier côté latéral ou au deuxième côté latéral de l'ouverture du mur, en fonction de l'emplacement du panneau photovoltaïque à proximité du premier côté ou du deuxième côté du coffre déterminé, lors de la première sous-étape de sélection, et
- une troisième sous-étape d'entrée d'une troisième distance entre la face avant du panneau photovoltaïque et une extrémité de la modification du bâtiment la plus éloignée de la face avant du panneau photovoltaïque selon une direction horizontale.

Selon une autre caractéristique avantageuse de l'invention, le procédé comprend, en outre, au moins :
- une étape de positionnement du terminal mobile à l'emplacement du panneau photovoltaïque par rapport à l'ouverture du mur du bâtiment, et
- suite à l'étape de positionnement, une étape de prise d'au moins une photographie, au moyen d'un appareil photographique du terminal mobile.

En outre, l'étape de positionnement et l'étape de prise sont mises en œuvre préalablement à la deuxième étape de détermination.

Selon une autre caractéristique avantageuse de l'invention, le procédé comprend, en outre, suite à l'étape de positionnement et préalablement à l'étape de prise, une première étape d'affichage de la modification du bâtiment par simulation sur un élément d'affichage du terminal mobile.

Selon une autre caractéristique avantageuse de l'invention, le procédé comprend, en outre, suite à l'étape de prise, une deuxième étape d'affichage de la photographie et de la modification du bâtiment par simulation sur un élément d'affichage du terminal mobile, la modification du bâtiment étant superposée sur la photographie.

Selon une autre caractéristique avantageuse de l'invention, le procédé comprend, en outre, une quatrième étape de détermination d'une orientation de l'appareil photographique du terminal mobile, lors de l'étape de prise de la photographie, au moyen d'un dispositif de détection d'orientation et du contrôleur du terminal mobile.

Selon une autre caractéristique avantageuse de l'invention, la troisième étape de détermination comprend une sous-étape de superposition de données de la photographie, prise lors de l'étape de prise, sur un diagramme de parcours solaires, dans un repère.

Selon une autre caractéristique avantageuse de l'invention, la troisième étape de détermination comprend, en outre, préalablement à la sous-étape de superposition, une sous-étape de projection de données de la photographie, prise lors de l'étape de prise, dans un repère de projection. En outre, la sous-étape de superposition est mise en œuvre à partir de données de la photographie, projetée lors de la sous-étape de projection, sur le diagramme de parcours solaires.

La présente invention vise, selon un deuxième aspect, un terminal mobile comprenant des éléments matériels et logiciels configurés pour mettre en œuvre un procédé de vérification de compatibilité conforme à l'invention et tel que mentionné ci-dessus.

La présente invention porte aussi sur un produit programme d'ordinateur comprenant des instructions de code de programme enregistrées sur un support lisible par ordinateur pour mettre en œuvre les étapes du procédé de vérification de compatibilité défini précédemment lorsque ledit programme fonctionne sur un ordinateur. Autrement dit, la présente invention porte aussi sur un produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé de vérification de compatibilité défini précédemment.

La présente invention porte encore sur un support d'enregistrement de données, lisible par un ordinateur, sur lequel est enregistré un programme d'ordinateur comprenant des instructions de code de programme de mise en œuvre du procédé de vérification de compatibilité défini précédemment ou sur un support d'enregistrement lisible par ordinateur comprenant des instructions qui, lorsqu'elles sont exécutées par un ordinateur, conduisent celui-ci à mettre en œuvre le procédé de vérification de compatibilité défini précédemment.

L'invention porte encore sur un signal d'un support de données, portant le produit programme d'ordinateur défini précédemment.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation de fermeture, d'occultation ou de protection solaire comprenant un dispositif d'occultation conforme à un mode de réalisation de l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique de l'installation ;
[Fig 4] la figure 4 est un schéma blocs d'un algorithme d'un procédé conforme à l'invention, de vérification de compatibilité d'un dispositif d'entraînement motorisé d'un dispositif d'occultation pour l'installation illustrée aux figures 1 à 3 ;
[Fig 5] la figure 5 représente, sur un premier insert A, l'installation illustrée aux figures 1 à 3 avec un panneau photovoltaïque disposé à gauche par rapport à un coffre et représente, sur un deuxième insert B, l'installation illustrée aux figures 1 à 3 avec le panneau photovoltaïque disposé à droite par rapport au coffre ;
[Fig 6] la figure 6 représente à plus grande échelle, sur un premier insert A, une partie de l'installation illustrée aux figures 1 à 3 et 5 avec le panneau photovoltaïque disposé à gauche par rapport au coffre dans le cas où une modification d'un bâtiment de l'installation est présente et représente à plus grande échelle, sur un deuxième insert B, une partie de l'installation illustrée aux figures 1 à 3 et 5 avec le panneau photovoltaïque disposé à droite par rapport au coffre dans le cas où une modification d'un bâtiment de l'installation est présente ;
[Fig 7] la figure 7 représente, sur un premier insert A, une photographie au moyen d'un écran d'affichage du terminal mobile selon le procédé de vérification de compatibilité illustré à la figure 4 dans le cas où une modification d'un bâtiment de l'installation n'est pas prise en compte et représente, sur un deuxième insert B, la même photographie dans le cas où la modification du bâtiment de l'installation est prise en compte ; et

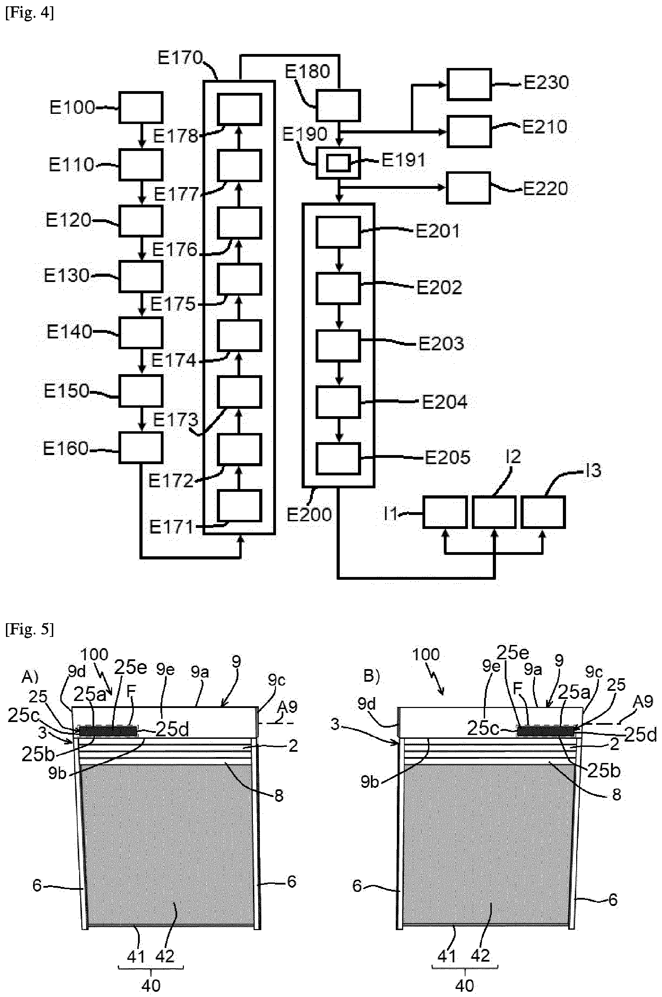

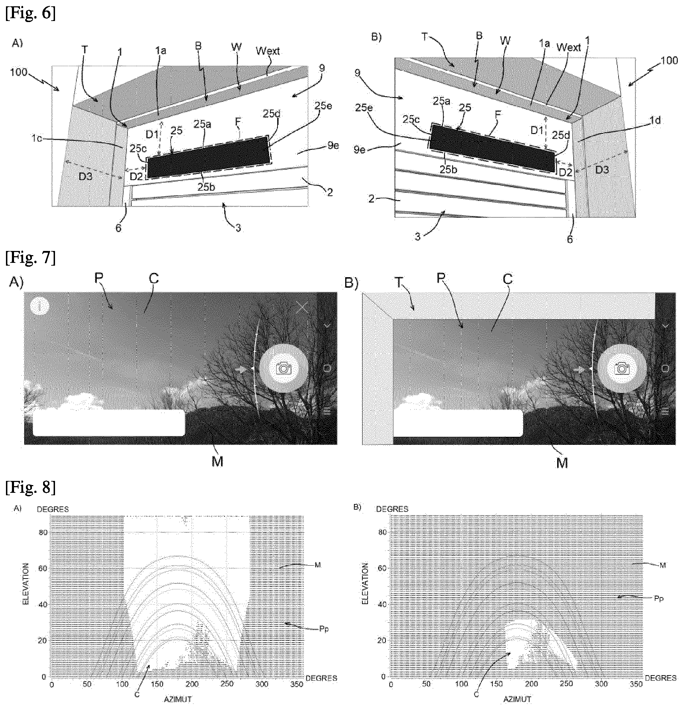

[Fig 8] la figure 8 représente, sur un premier insert A, un exemple de résultat d'une superposition de données d'une photographie projetée sur un diagramme de parcours solaires au moyen d'un contrôleur du terminal mobile selon le procédé de vérification de compatibilité illustré à la figure 4 dans le cas où une modification d'un bâtiment de l'installation n'est pas prise en compte et représente, sur un deuxième insert B, un exemple de résultat de la superposition de données de la même photographie projetée sur le diagramme de parcours solaires dans le cas où la modification du bâtiment de l'installation est prise en compte.

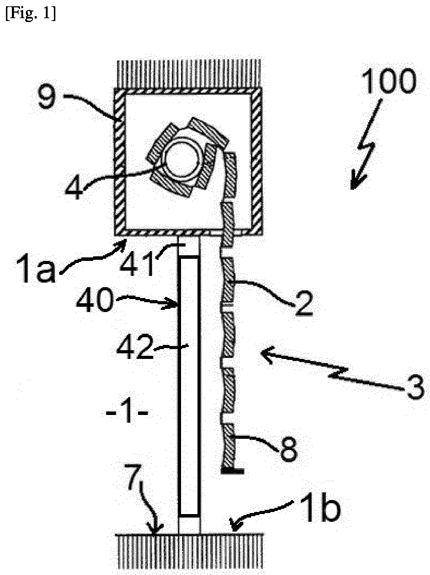

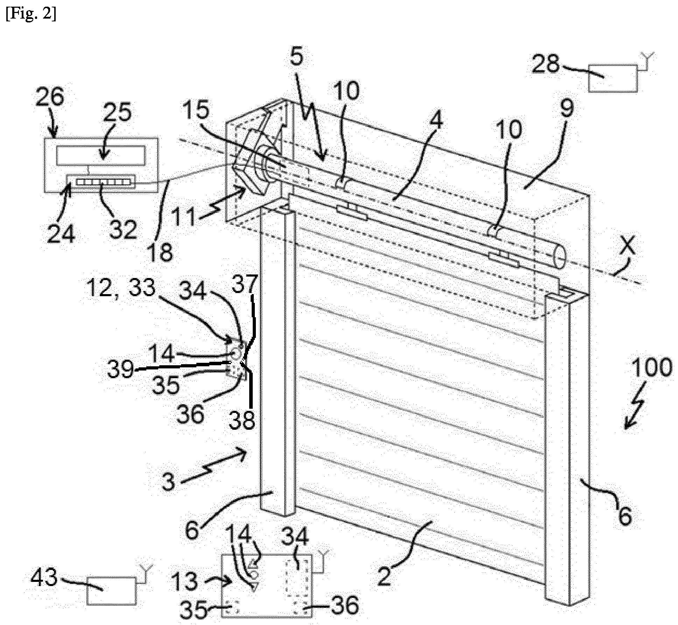

On décrit tout d'abord, en référence aux figures 1 et 2, une installation 100 comprenant un bâtiment B, une fenêtre 40 et un dispositif de fermeture, d'occultation ou de protection solaire 3 conforme à un mode de réalisation de l'invention.

Le bâtiment B comprend au moins un mur W. Le mur W comprend au moins une ouverture 1. Le mur W comprend, en outre, une face extérieure Wext et une face intérieure, non représentée. La face extérieure Wext du mur W est orientée vers l'extérieur du bâtiment B.

La fenêtre 40 est logée à l'intérieur de l'ouverture 1 du mur W.

L'ouverture 1 du mur W comprend un côté supérieur 1a, un côté inférieur 1b, un premier côté latéral 1c et un deuxième côté latéral 1d.

Le côté supérieur 1a de l'ouverture 1 du mur W peut également être appelée linteau. Les premier et deuxième côtés latéraux 1c, 1d de l'ouverture 1 du mur W peuvent également être appelés collectivement tableau.

Avantageusement, la fenêtre 40 comprend au moins un cadre dormant 41 et au moins une vitre 42. La vitre 42 est disposée à l'intérieur du cadre dormant 41, en particulier dans une configuration assemblée de la fenêtre 40.

Avantageusement, la fenêtre 40 peut, en outre, comprendre au moins un ouvrant, non représenté.

Avantageusement, la vitre 42 peut être soit montée dans le cadre dormant 41, dans le cas où celle-ci est fixe par rapport au cadre dormant 41, soit montée dans un cadre de l'ouvrant, dans le cas où celle-ci est mobile par rapport au cadre dormant 41, en particulier selon un mouvement de rotation, notamment dans le cas d'une fenêtre oscillante ou battante, ou selon un mouvement de translation, notamment dans le cas d'une fenêtre coulissante selon une direction horizontale ou verticale, ou selon deux mouvements de rotation, notamment dans le cas d'une fenêtre oscillo-battante.

Le dispositif de fermeture, d'occultation ou de protection solaire 3 est par la suite appelé « dispositif d'occultation ».

Le dispositif d'occultation 3 comprend un coffre 9 et un écran 2, en particulier un volet roulant motorisé.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

Le coffre 9 comprend une face supérieure 9a, une face inférieure 9b, un premier côté 9c, un deuxième côté 9d, une face avant 9e et une face arrière 9f. Le deuxième côté 9d est opposé au premier côté 9c selon une direction longitudinale A9 du coffre 9. La face avant 9e du coffre 9 est orientée vers l'extérieur du bâtiment B.

L'écran 2 est configuré pour être disposé en vis-à-vis de la fenêtre 40, de sorte à obturer partiellement ou complètement l'ouverture 1 ménagée dans le mur W.

On décrit, en référence aux figures 1 et 2, un volet roulant conforme à un mode de réalisation de l'invention.

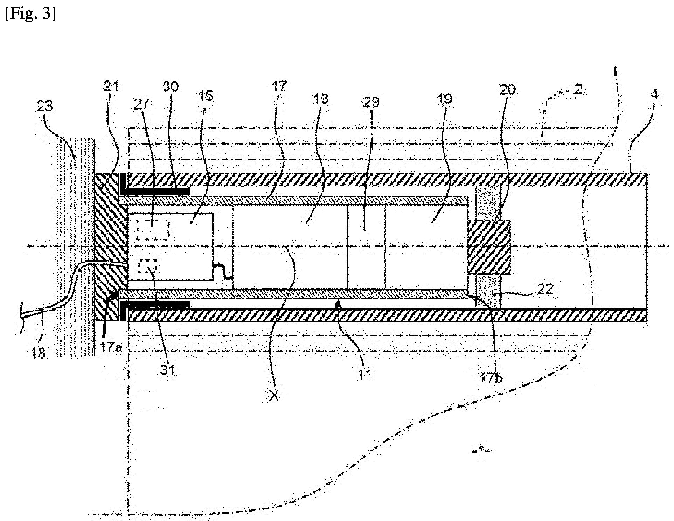

Le dispositif d'occultation 3 comprend un dispositif d'entraînement motorisé 5. Le dispositif d'entraînement motorisé 5 comprend au moins un actionneur électromécanique 11 illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord du coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, en particulier de l'actionneur électromécanique 11, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement, en vis-à-vis de la fenêtre 40, en particulier de la vitre 42.

**Ici, l'écran** 2 est disposé à l'extérieur du bâtiment.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation 100 comprend soit l'unité de commande locale 12, soit l'unité de commande centrale 13, soit l'unité de commande locale 12 et l'unité de commande centrale 13.

On décrit à présent, plus en détail et en référence à la figure 3, le dispositif d'entraînement motorisé 5, y compris l'actionneur électromécanique 11, appartenant à l'installation 100 des figures 1 et 2.

L'actionneur électromécanique 11 comprend au moins un moteur électrique 16.

Avantageusement, le moteur électrique 16 comprend un rotor et un stator, non représentés et positionnés de manière coaxiale autour de l'axe de rotation X du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et logiciels.

A titre d'exemple nullement limitatif, les moyens matériels peuvent comprendre au moins un microcontrôleur 31.

Ici, le dispositif d'entraînement motorisé 5 comprend, en outre, l'unité électronique de contrôle 15.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité électronique de contrôle 15.

Ainsi, le deuxième module de communication 36 de l'unité de commande locale 12 ou de l'unité de commande centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur la face intérieure du mur W du bâtiment ou sur une face du cadre dormant 41 de la fenêtre 40 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Le dispositif d'entraînement motorisé 5 peut également être contrôlé automatiquement, par exemple par la réception d'un ordre de commande correspondant à au moins un signal provenant d'au moins un capteur 43 et/ou à un signal provenant d'une horloge, non représentée, de l'unité électronique de contrôle 15, en particulier du microcontrôleur 31. Le capteur 43 et/ou l'horloge peuvent être intégrés, en variante, non représentée, à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Le carter 17 est creux. Le carter 17 comprend une première extrémité 17a et une deuxième extrémité 17b. La deuxième extrémité 17b est opposée à la première extrémité 17a.

Avantageusement, l'actionneur électromécanique 11 comprend, en outre, une couronne 30, autrement dit un manchon.

La couronne 30 est disposée, autrement dit est configurée pour être disposée, au voisinage de la première extrémité 17a du carter 17, en particulier dans la configuration assemblée de l'actionneur électromécanique 11.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, un arbre de sortie 20.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Le frein 29 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque le dispositif d'entraînement motorisé 5 est désactivé électriquement.

Ici et comme visible à la figure 3, en particulier dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, en particulier dans la configuration assemblée de l'actionneur électromécanique 11, le frein 29 est configuré pour être disposé, autrement dit est disposé :
- entre l'unité électronique de contrôle 15 et le moteur électrique 16, autrement dit à l'entrée du moteur électrique 16, ou
- entre le réducteur 19 et l'arbre de sortie 20, autrement dit à la sortie du réducteur 19, ou
- entre deux étages de réduction du réducteur 19.

Avantageusement, le réducteur 19 et, éventuellement, le frein 29 sont montés à l'intérieur du carter 17 de l'actionneur électromécanique 11, en particulier dans la configuration assemblée de l'actionneur électromécanique 11.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2, pouvant être mécanique ou électronique.

Avantageusement, le dispositif de détection d'obstacle et de fins de course est mis en œuvre au moyen du microcontrôleur 31 de l'unité électronique de contrôle 15 et, en particulier, au moyen d'un algorithme mis en œuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30. La couronne 30 permet ainsi de réaliser un palier. La deuxième liaison pivot, non représentée, est réalisée au niveau d'une deuxième extrémité du tube d'enroulement 4, opposée à la première extrémité.

La couronne 30 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 comprend, en outre, un support de couple 21, pouvant également être appelé « tête d'actionneur » ou « point fixe ».

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 de l'actionneur électromécanique 11 permet de fixer l'actionneur électromécanique 11 sur un bâti 23, en particulier à une joue du coffre 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité électronique de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Ici et comme illustré à la figure 3, la couronne 30 est disposée ou insérée, autrement dit est configurée pour être disposée ou insérée, autour d'une partie du carter 17, en particulier dans la configuration assemblée de l'actionneur électromécanique 11. Dans ce cas, la couronne 30 est montée libre en rotation autour du carter 17.

En variante, non représentée, la couronne 30 est disposée ou insérée, autrement dit est configurée pour être disposée ou insérée, autour du support de couple 21, en particulier dans la configuration assemblée de l'actionneur électromécanique 11. Dans ce cas, la couronne 30 est montée libre en rotation autour du support de couple 21.

Dans une autre variante, non représentée, la couronne 30 est disposée ou insérée, autrement dit est configurée pour être disposée ou insérée, d'une part, autour du support de couple 21 et, d'autre part, autour d'une partie du carter 17, en particulier dans la configuration assemblée de l'actionneur électromécanique 11. Dans un tel cas, la couronne 30 peut être montée libre en rotation, d'une part, autour du support de couple 21 et, d'autre part, autour du carter 17.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est ainsi disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Le dispositif d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Le dispositif d'alimentation en énergie électrique 26 comprend au moins une batterie 24, de type rechargeable, et au moins un panneau photovoltaïque 25.

Le panneau photovoltaïque 25 comprend un bord supérieur 25a, un bord inférieur 25b, un premier côté 25c, un deuxième côté 25d, une face avant 25e et une face arrière, non représentée. La face avant 25e du panneau photovoltaïque 25 est orientée vers l'extérieur du bâtiment B.

Le dispositif d'alimentation en énergie électrique 26 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24.

L'actionneur électromécanique 11 est relié électriquement au dispositif d'alimentation en énergie électrique 26 et, plus particulièrement, à la batterie 24, en particulier au moyen du câble d'alimentation électrique 18.

Avantageusement, la batterie 24 est configurée pour alimenter, autrement dit alimente, en énergie électrique l'actionneur électromécanique 11, en particulier l'unité électronique de contrôle 15 et le moteur électrique 16. En outre, la batterie 24 est configurée pour être alimentée, autrement dit est alimentée, en énergie électrique par le panneau photovoltaïque 25.

Ainsi, le rechargement de la batterie 24 est mis en œuvre par énergie solaire, au moyen du panneau photovoltaïque 25.

Avantageusement, la batterie 24 peut être disposée au niveau du coffre 9 du dispositif d'occultation 3.

Ici et comme illustré à la figure 2, la batterie 24 est disposée à l'extérieur du coffre 9.

En variante, non représentée, la batterie 24 peut être disposée à l'intérieur du coffre 9, à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici et tel qu'illustré à la figure 3, la batterie 24 est reliée électriquement directement à l'unité électronique de contrôle 15, par le câble d'alimentation électrique 18.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des accumulateurs rechargeables ou encore des piles rechargeables.

Avantageusement, le panneau photovoltaïque 25 comprend au moins une cellule photovoltaïque, non représentée, et, plus particulièrement, une pluralité de cellules photovoltaïques.

Avantageusement, le dispositif d'entraînement motorisé 5, en particulier le panneau photovoltaïque 25 et l'unité électronique de contrôle 15, comprend des éléments de chargement configurés pour charger la batterie 24, à partir de l'énergie solaire récupérée par le panneau photovoltaïque 25. Dans ce cas, le courant circule entre les composants 15, 24 et 25 à travers une liaison filaire, non représentée, pouvant être distincte du câble d'alimentation en énergie électrique 18.

**Ainsi, les** éléments de chargement configurés pour charger la batterie 24, à partir de l'énergie solaire, permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique au moyen de la batterie 24 ou à partir d'un réseau d'alimentation électrique du secteur, en particulier par le réseau alternatif commercial, notamment en fonction d'un état de charge de la batterie 24.

Ici et comme illustré à la figure 2, l'unité électronique de contrôle 15 comprend une seule carte électronique. En outre, la carte électronique est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

L'installation 100 comprend, en outre, au moins un terminal mobile 33.

Ici, le terminal mobile 33 peut être l'unité de commande locale 12 et comprendre tout ou partie des éléments constituant celle-ci.

Préférentiellement, le terminal mobile 33 est un téléphone intelligent, également appelé « Smartphone » en anglais.

En variante, le terminal mobile 33 peut être une tablette tactile ou un outil de configuration.

Le terminal mobile 33 peut ainsi être tout appareil mobile configuré pour mettre en œuvre un procédé de vérification de compatibilité du dispositif d'entraînement motorisé 5 du dispositif d'occultation 3 pour l'installation 100, tel que décrit par la suite.

Le terminal mobile 33 comprend au moins le contrôleur 35 et un appareil photographique 37, en particulier numérique.

Avantageusement, l'appareil photographique 37 du terminal mobile 33 est une caméra, en particulier numérique.

Avantageusement, l'appareil photographique 37 du terminal mobile 33 comprend un capteur d'image, non représenté.

Avantageusement, le capteur d'image de l'appareil photographique 37 du terminal mobile 33 est un capteur CCD (acronyme du terme anglo-saxon « Charged Couple Device »). En outre, le capteur d'image de l'appareil photographique 37 du terminal mobile 33 est configuré pour transformer des signaux lumineux en signaux électriques.

Avantageusement, le terminal mobile 33 comprend, en outre, un dispositif de détection d'orientation 38.

Avantageusement, le dispositif de détection d'orientation 38 du terminal mobile 33 comprend un gyroscope.

En variante, le dispositif de détection d'orientation 38 du terminal mobile 33 comprend un magnétomètre, pouvant être combiné avec un accéléromètre et/ou avec un gyroscope.

Le terminal mobile 33 comprend, en outre, un dispositif de positionnement 39, par exemple un dispositif de positionnement par satellites.

Ici, le terminal mobile 33 comprend le deuxième module de communication 36, tel que décrit précédemment en référence à l'unité de commande locale 12, de même que les éléments de sélection 14 et d'affichage 34.

Le terminal mobile 33 ou l'installation 100 comprennent tous les éléments matériels et logiciels nécessaires à la mise en œuvre du procédé de vérification de compatibilité objet de l'invention, tel que décrit par la suite. Les éléments peuvent inclure des modules logiciels.

On décrit à présent, en référence aux figures 4 à 8, un mode d'exécution d'un procédé de vérification de compatibilité du dispositif d'entraînement motorisé 5 du dispositif d'occultation 3 pour l'installation 100 de fermeture, d'occultation ou de protection solaire conforme à l'invention et représentée aux figures 1 à 3.

Le procédé de vérification de compatibilité est mis en œuvre au moyen du terminal mobile 33 et, plus particulièrement, au moyen d'une application du terminal mobile 33.

Ici, l'application du terminal mobile 33 permet de vérifier la compatibilité du dispositif d'entraînement motorisé 5 du dispositif d'occultation 3 pour l'installation 100.

Le procédé comprend une première étape de sélection E100 de l'actionneur électromécanique 11.

Avantageusement, la première étape de sélection E100 de l'actionneur électromécanique 11 est mise en œuvre, notamment, par un choix parmi une liste d'actionneurs électromécaniques ou par une entrée, autrement dit une saisie, d'un identifiant de l'actionneur électromécanique 11.

Avantageusement, le procédé comprend une première étape d'enregistrement E110 de l'actionneur électromécanique 11 sélectionné dans une mémoire du contrôleur 35 du terminal mobile 33.

Le procédé comprend une deuxième étape de sélection E120 du panneau photovoltaïque 25.

Avantageusement, la deuxième étape de sélection E120 du panneau photovoltaïque 25 est mise en œuvre, notamment, par un choix parmi une liste de panneaux photovoltaïques ou par une entrée, autrement dit une saisie, d'un identifiant du panneau photovoltaïque 25.

Avantageusement, le procédé comprend une deuxième étape d'enregistrement E130 du panneau photovoltaïque 25 sélectionné dans une mémoire du contrôleur 35 du terminal mobile 33.

Le procédé comprend une troisième étape de sélection E140 de la batterie 24.

Avantageusement, la troisième étape de sélection E140 de la batterie 24 est mise en œuvre, notamment, par un choix parmi une liste de batteries ou par une entrée, autrement dit une saisie, d'un identifiant de la batterie 24.

Avantageusement, le procédé comprend une troisième étape d'enregistrement E150 de la batterie 24 sélectionnée dans une mémoire du contrôleur 35 du terminal mobile 33.

Avantageusement, chacune des première, deuxième et troisième étapes de sélection E100, E120, E140 est mise en œuvre au travers des éléments de sélection 14 et d'affichage 34 du terminal mobile 33 ou par lecture d'une étiquette optique, comme, par exemple, un code-barres ou un QR code (acronyme du terme anglo-saxon « Quick Response »), au moyen de l'appareil photographique 37 du terminal mobile 33, ou par réception d'une radio-étiquette, au moyen du deuxième module de communication 36 du terminal mobile 33, telle que, par exemple, une étiquette RFID (acronyme du terme anglo-saxon « Radio Frequency IDentification ») ou NFC (acronyme du terme anglo-saxon « Near Field Communication »).

Avantageusement, chaque liste est mémorisée dans une mémoire du contrôleur 35 du terminal mobile 33 ou dans une mémoire du serveur 28 configuré pour communiquer avec le terminal mobile 33.

Le procédé comprend, en outre, une première étape de détermination E160 d'une localisation géographique de l'installation 100.

Avantageusement, la première étape de détermination E160 de la localisation géographique de l'installation 100 est mise en œuvre au travers du dispositif de positionnement 39 du terminal mobile 33 et/ou des éléments de sélection 14 et d'affichage 34 du terminal mobile 33 et/ou de données transmises par le serveur 28 au deuxième module de communication 36 du terminal mobile 33.

Ici, la première étape de détermination E160 est mise en œuvre au moyen du dispositif de positionnement 39 et du contrôleur 35 du terminal mobile 33. Cette localisation géographique de l'installation 100 peut correspondre à celle du terminal mobile 33, lorsque le dispositif de positionnement 39 est de type par satellites.

La localisation géographique de l'installation 100 peut ainsi être fournie par des signaux délivrés par le dispositif de positionnement 39 embarqué dans le terminal mobile 33, comme le système GPS (acronyme du terme anglo-saxon Global Positioning System), Galiléo, Glonass ou tout autre système équivalent. Le terminal mobile 33 peut afficher, par exemple, la longitude, la latitude et, éventuellement, l'altitude de l'installation 100, au moyen du ou des éléments d'affichage 34.

En variante ou en complément, la première étape de détermination E160 peut être mise en œuvre au travers des éléments de sélection 14 et d'affichage 34 du terminal mobile 33 et/ou de données transmises par le serveur 28 au deuxième module de communication 36 du terminal mobile 33.

En variante, la localisation géographique de l'installation 100 peut être estimée par l'utilisateur en utilisant une ou plusieurs applications mobiles enregistrées dans une mémoire du terminal mobile 33, en particulier du contrôleur 35 du terminal mobile 33, notamment en se plaçant à proximité de la fenêtre 40. Suivant un mode de mise en œuvre, le terminal mobile 33 peut afficher, par exemple, un nom d'une ville et/ou un code postal d'une ville où se situe le terminal mobile 33 ou tout autre type de localisation géographique, au moyen du ou de l'un des éléments d'affichage 34.

En variante, la localisation géographique de l'installation 100 peut être renseignée directement par l'utilisateur, par exemple, lorsque la disponibilité des signaux de positionnement par satellites n'est pas suffisante pour obtenir une estimation de la localisation géographique de l'installation 100 ou lorsque le terminal mobile 33 n'est pas équipé du dispositif de positionnement 39. Le ou l'un des éléments d'affichage 34 du terminal mobile 33 peut, par exemple, déclencher l'affichage d'une fenêtre ou d'un champ, notamment d'un écran tactile, dans lequel l'utilisateur peut entrer des informations sur la localisation géographique de l'installation 100, comme un nom d'une ville et/ou un code postal d'une ville. Cette ou ces informations peuvent être renseignées par l'utilisateur, par exemple, à l'aide du ou des éléments de sélection 14 du terminal mobile 33, notamment d'un écran tactile, un clavier réel ou virtuel, ou toute autre interface homme-machine équivalente. Par la suite, le deuxième module de communication 36 du terminal mobile 33 peut interroger un service web sur le serveur 28, afin d'obtenir des coordonnées d'une ville où se situe le terminal mobile 33. La localisation géographique de l'installation 100 peut également être renseignée directement par l'utilisateur sans avoir à interroger le serveur 28.

Avantageusement, un ou des renseignements entrés par l'utilisateur sur la localisation géographique de l'installation 100 peuvent servir pour vérifier les données de localisation géographique estimées par le terminal mobile 33. Dans le cas où les deux sources d'information coïncident, l'utilisateur peut valider les données de localisation géographique de l'installation 100 déterminées par le terminal mobile 33. Dans le cas contraire, l'utilisateur peut réitérer la première étape de détermination E160, à l'aide du terminal mobile 33 ou accepter les données de localisation géographique de l'installation 100 estimées par le terminal mobile 33.

Le procédé comprend, en outre, une deuxième étape de détermination E170 d'un emplacement F du panneau photovoltaïque 25 par rapport à l'ouverture 1 du mur W du bâtiment B et par rapport à la face extérieure Wext du mur W du bâtiment B.

Ici, l'emplacement F du panneau photovoltaïque 25 par rapport à l'ouverture 1 du mur W du bâtiment B est une zone, en particulier au niveau du coffre 9 et, plus particulièrement, au niveau de la face avant 9e du coffre 9, où le terminal mobile 33 est positionné lors de l'exécution du procédé et correspondant au futur emplacement du panneau photovoltaïque 25 suite à l'exécution du procédé.

La face extérieure Wext du mur W du bâtiment B est prévue pour intégrer ou recevoir une modification T du bâtiment B.

Ici, la modification T du bâtiment B est configurée pour être disposée, autrement dit est disposée, contre la face extérieure Wext du mur W.

Avantageusement, la modification T du bâtiment B est un ajout d'une isolation thermique extérieure au niveau de la face extérieure Wext du mur W du bâtiment B, en la posant contre la face extérieure Wext du mur W du bâtiment W, comme illustré aux figures 6 et 7.

En variante, non représentée, la modification T du bâtiment B est un ajout d'un balcon, d'une avancée ou d'un store d'extérieur contre la face extérieure Wext du mur W du bâtiment B.

La modification T du bâtiment B est dite « possible », car celle-ci est une hypothèse à prendre en considération au cours du procédé de vérification de compatibilité du dispositif d'entraînement motorisé 5 pour la rénovation du bâtiment B. Autrement dit, la modification T du bâtiment B est dite virtuelle.

Ainsi, le bâtiment B est dépourvu de la modification T du bâtiment B à l'instant de la mise en œuvre du procédé, autrement dit la modification T du bâtiment B n'est pas présente contre la face extérieure Wext du mur W lors de la mise en œuvre du procédé.

Avantageusement, la deuxième étape de détermination E170 comprend une première sous-étape de sélection E171 de l'emplacement F du panneau photovoltaïque 25 à proximité du premier côté 9c ou du deuxième côté 9d ou, éventuellement, au centre du coffre 9.

Avantageusement, la première sous-étape de sélection E171 de l'emplacement F du panneau photovoltaïque 25 est mise en œuvre, notamment, par un choix parmi une liste ou par une entrée, autrement dit une saisie, d'une donnée, pouvant correspondre, par exemple, à un montage à gauche ou à droite ou, éventuellement, au centre du panneau photovoltaïque 25 par rapport au coffre 9.

Avantageusement, la deuxième étape de détermination E170 comprend une première sous-étape d'enregistrement E172 de l'emplacement F du panneau photovoltaïque 25 sélectionné dans une mémoire du contrôleur 35 du terminal mobile 33.

Avantageusement, la deuxième étape de détermination E170 comprend, en outre, une première sous-étape d'entrée E173 d'une première distance D1 du bord supérieur 25a du panneau photovoltaïque 25 par rapport au côté supérieur 1a de l'ouverture 1 du mur W, comme illustrée à la figure 6.

Avantageusement, la première sous-étape d'entrée E173 de la première distance D1 est mise en œuvre, notamment, par une entrée, autrement dit une saisie, d'une première valeur, en particulier au travers des éléments de sélection 14 et d'affichage 34 du terminal mobile 33.

Avantageusement, la deuxième étape de détermination E170 comprend une deuxième sous-étape d'enregistrement E174 de la première distance D1 entrée dans une mémoire du contrôleur 35 du terminal mobile 33.

Ici, la première distance D1 peut être exprimée, par exemple, en millimètres.

Avantageusement, la deuxième étape de détermination E170 comprend, en outre, une deuxième sous-étape d'entrée E175 d'une deuxième distance D2 du premier côté 25c ou du deuxième côté 25d du panneau photovoltaïque 25 par rapport au premier côté latéral 1c ou au deuxième côté latéral 1d de l'ouverture 1 du mur W, en fonction de l'emplacement F du panneau photovoltaïque 25 à proximité du premier côté 9c ou du deuxième côté 9d du coffre 9 déterminé, lors de la première sous-étape de sélection E171, comme illustrée à la figure 6.

Avantageusement, la deuxième sous-étape d'entrée E175 de la deuxième distance D2 est mise en œuvre, notamment, par une entrée, autrement dit une saisie, d'une deuxième valeur, en particulier au travers des éléments de sélection 14 et d'affichage 34 du terminal mobile 33.

Avantageusement, la deuxième étape de détermination E170 comprend une troisième sous-étape d'enregistrement E176 de la deuxième distance D2 entrée dans une mémoire du contrôleur 35 du terminal mobile 33.

Ici, la deuxième distance D2 peut être exprimée, par exemple, en millimètres.

Avantageusement, la deuxième étape de détermination E170 comprend, en outre, une troisième sous-étape d'entrée E177 d'une troisième distance D3 entre la face avant 25e du panneau photovoltaïque 25 et l'aplomb de la modification T du bâtiment B, comme illustrée à la figure 6.

Autrement dit, la troisième distance D3 est mesurée entre la face avant 25e du panneau photovoltaïque 25 et une extrémité de la modification T du bâtiment B la plus éloignée de la face avant 25e du panneau photovoltaïque 25 selon une direction horizontale, en particulier parallèle au sol.

Avantageusement, la troisième sous-étape d'entrée E177 de la troisième distance D3 est mise en œuvre, notamment, par une entrée, autrement dit une saisie, d'une troisième valeur, en particulier au travers des éléments de sélection 14 et d'affichage 34 du terminal mobile 33.

Avantageusement, la deuxième étape de détermination E170 comprend une quatrième sous-étape d'enregistrement E178 de la troisième distance D3 entrée dans une mémoire du contrôleur 35 du terminal mobile 33.

Ici, la troisième distance D3 peut être exprimée, par exemple, en millimètres. Avantageusement, le procédé comprend, en outre, une étape de positionnement E180 du terminal mobile 33 à l'emplacement F du panneau photovoltaïque 25 par rapport à l'ouverture 1 du mur W du bâtiment B. En outre, suite à l'étape de positionnement E180, le procédé comprend une étape de prise E190 d'au moins une photographie P, au moyen de l'appareil photographique 37 du terminal mobile 33.

Ici, l'emplacement F du panneau photovoltaïque 25 par rapport à l'installation 100 correspond à un emplacement où le panneau photovoltaïque 25 est à positionner dans l'installation 100 pour permettre une alimentation en énergie électrique du dispositif d'entraînement motorisé 5 et, plus particulièrement, de la batterie 24 et de l'actionneur électromécanique 11.

Ainsi, l'étape de positionnement E180 consiste à placer le terminal mobile 33 à l'endroit où le panneau photovoltaïque 25 est souhaité être installé, dans la configuration assemblée de l'installation 100.

Avantageusement, l'étape de prise E190 de la photographie P comprend au moins une sous-étape de détermination E191 d'une orientation de l'appareil photographique 37 du terminal mobile 33, au moyen du dispositif de détection d'orientation 38 et du contrôleur 35 du terminal mobile 33.

Ici, la première sous-étape de détermination E191 permet de déterminer une orientation de l'appareil photographique 37 du terminal mobile 33 par rapport à un repère R et, éventuellement, une inclinaison de l'appareil photographique 37 du terminal mobile 33 par rapport au sol et/ou une assiette de l'appareil photographique 37 du terminal mobile 33, c'est-à-dire une rotation par rapport à chacun des axes X, Y, Z d'un repère tridimensionnel.

Dans un premier exemple de réalisation, le procédé comprend, en outre, suite à l'étape de positionnement E180 et préalablement à l'étape de prise E190, une étape d'affichage E210 de la modification T du bâtiment B par simulation sur un élément d'affichage 34 du terminal mobile 33, comme illustré à la figure 7.

Avantageusement, la première étape d'affichage E210 de la modification T du bâtiment B est mise en œuvre lorsque l'appareil photographique 37 du terminal mobile 33 est activé, autrement dit est en fonctionnement.

Avantageusement, la première étape d'affichage E210 de la modification T du bâtiment B est mise en œuvre en continu tant que l'appareil photographique 37 du terminal mobile 33 est activé, en particulier en mettant à jour, notamment de manière périodique, l'affichage sur l'élément d'affichage 34.

Avantageusement, la première étape d'affichage E210 est mise en œuvre suite à la deuxième étape de détermination E170.

Dans un deuxième exemple de réalisation, en variante ou en complément du premier exemple de réalisation, le procédé comprend, en outre, suite à l'étape de prise E190, une deuxième étape d'affichage E220 de la photographie P et de la modification T du bâtiment B par simulation sur un élément d'affichage 34 du terminal mobile 33. La modification T du bâtiment B est superposée sur la photographie P, comme illustré à la figure 7.

Avantageusement, la deuxième étape d'affichage E220 de la modification T du bâtiment B est mise en œuvre une seule fois suite à la prise de la photographie P.

Avantageusement, la deuxième étape d'affichage E220 est mise en œuvre suite à la deuxième étape de détermination E170.

Dans un troisième exemple de réalisation, le procédé est dépourvu d'une étape d'affichage de la modification T du bâtiment B par simulation sur un élément d'affichage 34 du terminal mobile 33, tel que cela est prévu dans le premier exemple de réalisation ou dans le deuxième exemple de réalisation.

Avantageusement, quel que soit l'exemple de réalisation, le procédé comprend, en outre, suite à la deuxième étape de détermination E170 et, en particulier, suite à l'étape de positionnement E180 et préalablement à l'étape de prise E190, une autre étape de détermination E230 des contours de la modification T du bâtiment B au niveau de l'ouverture 1 du mur W, autrement dit autour de l'ouverture 1 du mur W, à partir des première, deuxième et troisième distances D1, D2, D3 entrées, autrement dit saisies ou renseignées, lors des première, deuxième et troisième sous-étapes d'entrée E173, E175, E177.

Cette autre étape de détermination E230 peut également être appelée quatrième ou cinquième étape de détermination.

Ainsi, les contours de la modification T du bâtiment B au niveau de l'ouverture 1 du mur W sont déterminés par rapport à un point focal d'un objectif de l'appareil photographique 37 du terminal mobile 33, étant donné que le terminal mobile 33 est positionné à l'emplacement F du panneau photovoltaïque 25 par rapport à l'ouverture 1 du mur W du bâtiment B.

De cette manière, quel que soit l'exemple de réalisation, l'autre étape de détermination E230 est mise en œuvre par un calcul géométrique.

Ici, le calcul géométrique est mis en œuvre par le contrôleur 35 du terminal mobile 33.

Avantageusement, le positionnement du terminal mobile 33 à l'emplacement F du panneau photovoltaïque 25 par rapport à l'installation 100, lors de l'étape de positionnement E180, est mis en œuvre en considérant que le point focal de l'objectif de l'appareil photographique 37 du terminal mobile 33 est placé au centre du panneau photovoltaïque 25.

En variante, le positionnement du terminal mobile 33 à l'emplacement F du panneau photovoltaïque 25 par rapport à l'installation 100, lors de l'étape de positionnement E180, est mis en œuvre en considérant que le point focal de l'objectif de l'appareil photographique 37 du terminal mobile 33 est placé dans un des angles du panneau photovoltaïque 25. Par exemple, le point focal de l'objectif de l'appareil photographique 37 peut être positionné aux première, deuxième et troisième distances D1, D2, D3 de la modification T du bâtiment B envisagée.

Ainsi, quel que soit l'exemple de réalisation, le calcul géométrique mis en œuvre par le contrôleur 35 du terminal mobile 33, lors de l'autre étape de détermination E230, permet de prendre en considération les dimensions du panneau photovoltaïque 25, notamment en termes de hauteur, de largeur et d'épaisseur, à partir d'un point caractéristique définissant un encombrement, en particulier un volume, du panneau photovoltaïque 25.

Le procédé comprend, en outre, une troisième étape de détermination E200 d'un masque solaire M, au moyen du contrôleur 35 du terminal mobile 33, pour l'emplacement F du panneau photovoltaïque 25 par rapport à l'ouverture 1 du mur W du bâtiment B.

Avantageusement, l'étape de positionnement E180 et l'étape de prise E190 sont mises en œuvre préalablement à la troisième étape de détermination E200.

Le masque solaire M prend en considération la modification T du bâtiment B.

Avantageusement, le masque solaire M est déterminé à partir d'un ou plusieurs obstacles disposés en vis-à-vis du panneau photovoltaïque 25 et pouvant provoquer une ombre sur celui-ci par rapport au soleil, en particulier dans la configuration assemblée de l'installation 100, à un instant donné, en particulier au cours d'une année.

Ce ou ces obstacles peuvent être, par exemple, un bâtiment, pouvant être, notamment, une maison ou un immeuble, de la végétation, pouvant être, notamment, un arbuste ou un arbre, et/ou un relief du paysage autour de l'installation 100, pouvant être, notamment, une montagne.

Ce ou ces obstacles comprennent, en outre, la modification T du bâtiment B, telle que, par exemple, l'ajout de l'isolation thermique extérieure au niveau de la face extérieure Wext du mur W du bâtiment B ou l'ajout du balcon, de l'avancée ou du store d'extérieur contre la face extérieure Wext du mur W du bâtiment B.

Ce ou ces obstacles définissant le masque solaire M peuvent réduire, voire stopper, une production d'énergie électrique par le panneau photovoltaïque 25, à partir d'apports énergétiques provenant du soleil.

Le masque solaire M, pouvant également être appelé masque d'ombrage, est ainsi une représentation d'éléments projetant, selon la direction définie en abscisses et en ordonnées, une ombre à l'emplacement F du panneau photovoltaïque 25 par rapport à l'installation 100.

Ici, l'emplacement F du panneau photovoltaïque 25 par rapport à l'installation 100 correspond à un emplacement à partir duquel le masque solaire M est à déterminer pour permettre la vérification de compatibilité du dispositif d'entraînement motorisé 5 en fonction des apports énergétiques solaires fournis au panneau photovoltaïque 25 à un instant donné et, plus particulièrement, au cours de l'année.

Avantageusement, la troisième étape de détermination E200 comprend, en outre, une première sous-étape de détermination E201 d'au moins une zone de ciel C à partir de la photographie P, prise lors l'étape de prise E190, au moyen du contrôleur 35 du terminal mobile 33.

Avantageusement, la première sous-étape de détermination E201 comprend un traitement d'image.

Avantageusement, le traitement d'image, lors de la première sous-étape de détermination E201, est mis en œuvre par le contrôleur 35 du terminal mobile 33, notamment au moyen d'un logiciel embarqué par le contrôleur 35 du terminal mobile 33.

Avantageusement, le traitement d'image, lors de la première sous-étape de détermination E201, consiste à réaliser une segmentation binaire de la photographie P pour séparer le ciel C des autres éléments de la photographie P.

Dans un exemple de réalisation, une telle segmentation binaire de la photographie P consiste à évaluer une radiométrie, en particulier de type RGB (acronyme du terme anglo-saxon Red Green Blue), des pixels de la photographie P, de sorte à déterminer une luminosité de chaque pixel de la photographie P, et à déterminer pour chaque colonne de la photographie P des gradients de luminosité. Lorsque le gradient de luminosité est élevé et, en particulier, supérieur à un seuil prédéterminé, celui-ci peut correspondre à une frontière entre le ciel C et un autre élément de la photographie P.

Avantageusement, la photographie P, prise lors de l'étape de prise E190, peut être convertie en image noir et blanc. Par exemple, les pixels de l'image représentant le ciel C sont transformés en pixels blancs et tous les autres pixels sont convertis en pixels noirs.

Avantageusement, la troisième étape de détermination E200 comprend une deuxième sous-étape de détermination E202 de la date et de l'heure lors de la sous-étape de prise E190.

Ici, la deuxième sous-étape de détermination E202 est mise en œuvre au moyen du contrôleur 35 du terminal mobile 33.

En variante ou en complément, la deuxième sous-étape de détermination E202 est mise en œuvre au travers des éléments de sélection 14 et d'affichage 34 du terminal mobile 33 et/ou de données transmises par le serveur 28 au deuxième module de communication 36 du terminal mobile 33.

Avantageusement, la troisième étape de détermination E200 comprend, en outre, en particulier suite à la première sous-étape de détermination E201, une sous-étape de projection E203 de données de la photographie P, prise lors de l'étape de prise E190, dans un repère de projection V.

Ici, la sous-étape de projection E203 est mise en œuvre au moyen du contrôleur 35 du terminal mobile 33.

Un exemple de résultat de la projection des données de la photographie P dans le repère de projection V est illustré à la figure 8.

La sous-étape de projection E203 est mise en œuvre en fonction de données d'orientation de l'appareil photographique 37 du terminal mobile 33, déterminées lors de la sous-étape de détermination E191, pouvant être des angles définissant, notamment, une précession, autrement dit un tangage, une nutation, autrement dit roulis et une rotation propre, autrement dit un lacet. De tels angles sont communément appelés les angles d'Euler.

Ici, la sous-étape de projection E203 correspond à une étape de changement de repère des données de la photographie P, notamment à partir du repère R, par exemple cardinal, vers le repère de projection V et, plus particulièrement, d'un repère tridimensionnel centré sur un point milieu du capteur d'image de l'appareil photographique 37 du terminal mobile 33 vers le repère de projection V.

Avantageusement, le repère de projection V est un repère dans lequel sont représentées des coordonnées angulaires d'azimut et d'élévation. A la figure 8, l'azimut est représenté en abscisses et l'élévation est représentée en ordonnées, dans un repère cartésien orthogonal.

Avantageusement, le repère de projection V de la photographie P, prise lors de l'étape de prise E190, est un repère sphérique de voute céleste.

Les angles, dits d'Euler, permettent d'exprimer en coordonnées sphériques, en particulier dans le repère de projection V, l'orientation d'un élément, en particulier de l'appareil photographique 37 du terminal mobile 33, par rapport à un repère cartésien, autrement dit un repère tridimensionnel, en particulier le repère R, pouvant également être appelé repère cardinal.

Ici, pour chaque direction à partir de l'emplacement F du panneau photovoltaïque 25 par rapport à l'installation 100, dans le repère de projection V, un angle d'azimut est assimilé à un angle de rotation propre dans le repère R et un angle d'élévation est assimilé à un angle de précession dans le repère R.

Avantageusement, la sous-étape de projection E203 des données de la photographie P, prise lors de l'étape de prise E190, est mise en œuvre, en outre, en fonction d'une distance focale d'un objectif de l'appareil photographique 37 du terminal mobile 33.

Avantageusement, la sous-étape de projection E203 des données de la photographie P, prise lors de l'étape de prise E190, est mise en œuvre, en outre, en fonction de dimensions d'un capteur d'image de l'appareil photographique 37 du terminal mobile 33, autrement dit des angles de champ horizontaux et verticaux de l'appareil photographique 37 du terminal mobile 33.

Dans un exemple de réalisation, la sous-étape de projection E203, dans le repère de projection V, comprend une première sous-étape de passage des données de la photographie P d'un premier repère tridimensionnel centré sur un point milieu du capteur d'image de l'appareil photographique 37 du terminal mobile 33 à un deuxième repère tridimensionnel centré sur le point focal de l'objectif de l'appareil photographique 37 du terminal mobile 33. Cette première sous-étape de la sous-étape de projection E203 nécessite préalablement une sous-étape d'entrée et une sous-étape de mémorisation par le contrôleur 35 du terminal mobile 33 de la distance focale de l'objectif de l'appareil photographique 37 du terminal mobile 33 et des dimensions du capteur d'image de l'appareil photographique 37 du terminal mobile 33. Cette première sous-étape de la sous-étape de projection E203 permet ainsi d'obtenir un résultat comprenant trois matrices, chacune exprimant une coordonnée de chaque pixel de la photographie P selon les axes X, Y, Z du deuxième repère tridimensionnel. En outre, la sous-étape de projection E203, dans le repère de projection V, comprend une deuxième sous-étape de passage du résultat de la première sous-étape de la sous-étape de projection E203 du deuxième repère tridimensionnel au repère de projection V centré sur le point focal de l'objectif de l'appareil photographique 37 du terminal mobile 33. Cette deuxième sous-étape de la sous-étape de projection E203 nécessite préalablement de déterminer chaque angle, dit d'Euler, lors de la sous-étape de détermination E191, et d'appliquer au moyen du contrôleur 35 du terminal mobile 33 des matrices de rotation, dites d'Euler, pour chacun de ces angles. Cette deuxième sous-étape de la sous-étape de projection E203 permet ainsi d'obtenir un résultat comprenant deux matrices, chacune exprimant une coordonnée de chaque pixel de la photographie P selon les angles d'élévation et d'azimut du repère de projection V.

Avantageusement, la sous-étape de projection E203 est mise en œuvre en fonction de l'orientation déterminée de l'appareil photographique 37 du terminal mobile 33, lors de la sous-étape de détermination E191, de la distance focale de l'objectif de l'appareil photographique 37 du terminal mobile 33, des dimensions du capteur d'image de l'appareil photographique 37 du terminal mobile 33 et d'au moins un angle, dit d'Euler, déterminé, lors de la sous-étape de détermination E191. L'au moins un des angles, dits d'Euler, à prendre en considération est, notamment, l'au moins un des angles appelés rotation propre, précession et nutation et, préférentiellement, l'ensemble des angles, dits d'Euler.

Avantageusement, la troisième étape de détermination E200 comprend, en outre, en particulier suite à la sous-étape de projection E203, une sous-étape de superposition E204 de données de la photographie P, prise lors de l'étape de prise E190, en particulier de la photographie Pp, projetée lors de la sous-étape de projection E203, sur un diagramme de parcours solaires D, dans le repère R, en particulier dans le repère de projection V.

Ici, le diagramme de parcours solaires D est déterminé dans le repère de projection V.

Le diagramme de parcours solaires D, également appelé diagramme solaire, est un diagramme indiquant, à différents instants de l'année, une hauteur angulaire, également appelée hauteur d'angle ou d'élévation, du soleil et un azimut de la direction du soleil pour une latitude donnée. Le diagramme de parcours solaires D permet ainsi de définir une trajectoire du soleil perçue à l'emplacement F du panneau photovoltaïque 25 par rapport à l'installation 100 pour différents instants, au cours de l'année. De cette manière, le diagramme de parcours solaires D permet de définir des instants pendant lesquels un rayonnement solaire direct incident existe à l'emplacement F du panneau photovoltaïque 25 par rapport à l'installation 100, en particulier dans des conditions météorologiques où le ciel C est clair et en l'absence d'obstacles au rayonnement solaire.

Le diagramme de parcours solaires D illustré à la figure 8 est un exemple de représentation graphique pour une latitude et une longitude données. Chaque courbe représente une course apparente du soleil en fonction d'une heure pour une date déterminée de l'année.

Ici, la sous-étape de superposition E204 est mise en œuvre au moyen du contrôleur 35 du terminal mobile 33.

La superposition des données de la photographie P, prise lors de l'étape de prise E190, en particulier de la photographie Pp, projetée lors de la sous-étape de projection E203, sur le diagramme de parcours solaires D, dans le repère R, en particulier dans le repère de projection V, permet ainsi de déterminer à chaque instant, en particulier au cours de l'année, si le soleil est visible ou non à l'emplacement F du panneau photovoltaïque 25 par rapport à l'installation 100.

Afin de mettre en œuvre la sous-étape de superposition E204, les données de la photographie P, en particulier de la photographie Pp, et les données du diagramme de parcours solaires D sont exprimées dans le même repère, autrement dit dans un repère commun.

Le repère commun peut être, notamment, un repère cardinal, un repère tridimensionnel centré sur un point milieu du capteur d'image de l'appareil photographique 37 du terminal mobile 33, un repère tridimensionnel centré sur le point focal de l'objectif de l'appareil photographique 37 du terminal mobile 33 ou un repère sphérique de voute céleste, appelé également repère de projection.

Ici, la sous-étape de superposition E204 est mise en œuvre à partir de données de la photographie Pp, projetée lors de la sous-étape de projection E203, sur le diagramme de parcours solaires D. Ici, les données de la photographie projetée Pp sont obtenues à partir des données de la photographie P, prise lors de l'étape de prise E190.

Un exemple de résultat de la superposition des données de la photographie projetée Pp sur le diagramme de parcours solaires D est illustré à la figure 8.

Avantageusement, la troisième étape de détermination E200 comprend une première sous-étape de mémorisation E205 de données définissant la photographie P, prise lors de l'étape de prise E190, et, éventuellement, de la photographie Pp, projetée lors de la sous-étape de projection E203, dans une mémoire du contrôleur 35 du terminal mobile 33.

Ici, les sous-étapes de projection et de superposition E203, E204 sont illustrées par des opérations géométriques. Les sous-étapes de projection et de superposition E203, E204 sont avantageusement réalisées sans affichage illustrant ces sous-étapes. Ces sous-étapes peuvent être groupées dans une seule sous-étape de calcul permettant de déterminer le masque solaire M.

Les sous-étapes de calcul de la troisième étape de détermination E200 ont été décrites comme étant mises en œuvre au niveau local dans le terminal mobile 33. Toutefois, ces sous-étapes de calcul peuvent alternativement être mises en œuvre partiellement ou intégralement dans le serveur 28.

Dans la description qui précède, la figure 8 est une illustration explicative des traitements numériques réalisés. Des traitements numériques complémentaires ou alternatifs peuvent être mis en œuvre. Le procédé objet de l'invention peut ne mettre en œuvre à aucun moment un affichage de la, de certaines ou d'un ensemble d'illustrations.

Le procédé comprend, en outre, une phase de vérification U de compatibilité du dispositif d'entraînement motorisé 5, au cours de laquelle au moins les première, deuxième et troisième étapes de sélection E100, E120, E140, éventuellement les étapes de positionnement et de prise E180, E190, et les première, deuxième et troisième étapes de détermination E160, E170, E200 sont exploitées.

La vérification de compatibilité du dispositif d'entraînement motorisé 5 est mise en œuvre en prenant en considération la modification T du bâtiment B.

Suite à la phase de vérification U, si le résultat de la vérification de compatibilité est positif, alors le procédé comprend une première étape d'information I1 selon laquelle le dispositif d'entraînement motorisé 5 est apte à être intégré et être mis en service dans l'installation 100 avec la présence de la modification T du bâtiment B.

Avantageusement, dans le cas où le résultat de la vérification de compatibilité est positif suite à la phase de vérification U, un premier message d'information est affiché, lors de la première étape d'information I1, par le terminal mobile 33, en particulier au travers du ou des éléments d'affichage 34, indiquant que le dispositif d'entraînement motorisé 5 est apte à être intégré et être mis en service dans l'installation 100 avec la présence de la modification T du bâtiment B.

Tandis que, si le résultat de la vérification de compatibilité est négatif, alors le procédé comprend une deuxième étape d'information I2 selon laquelle le panneau photovoltaïque 25 est à déplacer par rapport à l'ouverture 1 du mur W du bâtiment B, pour intégrer et mettre en service le dispositif d'entraînement motorisé 5 dans l'installation 100 avec la présence de la modification T du bâtiment B.

Avantageusement, dans le cas où le résultat de la vérification de compatibilité est négatif suite à la phase de vérification U, un deuxième message d'information est affiché, lors de la deuxième étape d'information I2, par le terminal mobile 33, en particulier au travers du ou des éléments d'affichage 34, indiquant que le panneau photovoltaïque 25 est à déplacer par rapport à l'ouverture 1 du mur W du bâtiment B, pour intégrer et mettre en service le dispositif d'entraînement motorisé 5 dans l'installation 100 avec la présence de la modification T du bâtiment B.

Avantageusement, après le déplacement du panneau photovoltaïque 25 par rapport à l'ouverture 1 du mur W du bâtiment B, le procédé peut à nouveau être mis en œuvre.

Avantageusement, ce déplacement peut être virtuel, c'est-à-dire reposer sur une détermination d'un nouveau masque solaire M au moyen du terminal 33 pour un nouvel emplacement F où ne se trouve pas (encore) le panneau photovoltaïque 25.

En pratique, le terminal mobile 33 est positionné à ce nouvel emplacement F pour mettre en œuvre la nouvelle itération du procédé.

Avantageusement, des itérations de déplacement peuvent être mises en œuvre jusqu'à ce que le procédé conduise à un résultat de la vérification de compatibilité positif. Puis, le panneau photovoltaïque 25 peut alors être positionné physiquement au dernier emplacement F ayant conduit au résultat de la vérification de compatibilité positif.

En variante, si le résultat de la vérification de compatibilité est négatif, alors le procédé comprend une autre étape d'information I3, pouvant également être appelée troisième étape d'information, selon laquelle le dispositif d'entraînement motorisé 5 est considéré comme non compatible pour l'installation 100 avec la présence de la modification T du bâtiment B ou une recharge de la batterie 24 est à prévoir au cours de l'année, au moyen d'une source d'alimentation en énergie électrique externe, distincte du panneau photovoltaïque 25.

Dans ce cas, un autre message d'information, pouvant également être appelé troisième message d'information, est affiché, lors de la troisième étape d'information I3, par le terminal mobile 33, en particulier au travers du ou des éléments d'affichage 34, indiquant que le dispositif d'entraînement motorisé 5 est considéré comme non compatible pour l'installation 100 avec la présence de la modification T du bâtiment B ou qu'une recharge de la batterie 24 est à prévoir au cours de l'année.

Avantageusement, dans le cas où une recharge de la batterie 24 est à prévoir au cours de l'année, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante, non représentée, dans le cas où une recharge de la batterie 24 est à prévoir au cours de l'année, le dispositif d'alimentation en énergie électrique 26 comprend, en outre, une batterie auxiliaire, la batterie auxiliaire étant configurée pour recharger la batterie 24.

Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale.

En outre, la batterie auxiliaire peut permettre de recharger une batterie d'autres équipements électriques, notamment nomades, tels que, par exemple, un téléphone portable ou un ordinateur portable.

Par ailleurs, une telle batterie auxiliaire, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

Ici, le procédé de vérification de compatibilité peut également être appelé un procédé de détermination d'un diagnostic. En outre, la phase de vérification U de vérification de compatibilité peut également être appelée un test.

Ainsi, un tel procédé de vérification de compatibilité du dispositif d'entraînement motorisé 5 permet de déterminer si le dispositif d'entraînement motorisé 5, équipé du panneau photovoltaïque 25 et de la batterie 24 pour alimenter en énergie électrique l'actionneur électromécanique 11, est considéré comme compatible ou non pour l'installation 100 en raison d'une modification T de la face extérieure Wext du mur W du bâtiment B, avant de démarrer un chantier de réhabilitation du bâtiment B, notamment d'un point de vue énergétique.

De cette manière, le procédé de vérification de compatibilité du dispositif d'entraînement motorisé 5 permet de fournir un diagnostic concernant une possibilité ou non d'intégrer et de mettre en service le dispositif d'entraînement motorisé 5 du dispositif d'occultation 3 dans l'installation 100 de fermeture, d'occultation ou de protection solaire en prenant en considération la modification T de la face extérieure Wext du mur W du bâtiment B, notamment l'ajout d'une isolation thermique extérieure au niveau de la face extérieure Wext du mur W du bâtiment B, en la posant contre la face extérieure Wext du mur W du bâtiment B, ou l'ajout d'un balcon, d'une avancée ou d'un store d'extérieur disposé contre la face extérieure Wext du mur W du bâtiment B. Ce diagnostic concerne l'impact de la modification T du bâtiment B sur l'autonomie énergétique du dispositif d'occultation 3 de l'installation 100.

En outre, un tel procédé de vérification de compatibilité est particulièrement intéressant dans le cadre d'une évaluation de la réhabilitation d'un bâtiment collectif comprenant un nombre important de dispositifs d'occultation 3. Néanmoins, ce procédé peut également être intéressant dans le cas d'un bâtiment individuel.

Par conséquent, le procédé de vérification de compatibilité du dispositif d'entraînement motorisé 5 du dispositif d'occultation 3 pour l'installation 100 permet de vérifier si l'emplacement F du panneau photovoltaïque 25 est situé à un endroit de l'installation 100 adapté pour que le panneau photovoltaïque 25 reçoive une quantité suffisante d'énergie solaire, au cours de l'année, de sorte à alimenter en énergie électrique le dispositif d'entraînement motorisé 5 et, plus particulièrement, la batterie 24 et l'actionneur électromécanique 11, avec la présence de la modification T du bâtiment B.

Une telle vérification de compatibilité du dispositif d'entraînement motorisé 5 pour l'installation 100 vise à vérifier que le panneau photovoltaïque 25 est en mesure de fournir une quantité d'énergie électrique suffisante pour exécuter un nombre minimal d'ordres de commande reçus par le premier module de communication 27 de l'unité électronique de contrôle 15, chaque jour au cours de l'année, avec la présence de la modification T du bâtiment B.

Avantageusement, le résultat de la phase de vérification U est déterminé positif s'il apparaît que le panneau photovoltaïque 25 implanté à l'emplacement F de l'installation 100 sera exposé, au cours d'une période prédéterminée, à un rayonnement solaire direct pendant une durée supérieure à une valeur seuil prédéterminée de durée. En outre, le résultat de la phase de vérification U est déterminé négatif dans le cas contraire.

Grâce à la présente invention, le procédé de vérification de compatibilité du dispositif d'entraînement motorisé permet de déterminer si le dispositif d'entraînement motorisé, équipé du panneau photovoltaïque et de la batterie pour alimenter en énergie électrique l'actionneur électromécanique, est considéré comme compatible ou non pour l'installation en raison d'une modification de la face extérieure du mur du bâtiment, avant de démarrer un chantier de réhabilitation du bâtiment, notamment d'un point de vue énergétique.

De nombreuses modifications peuvent être apportées aux exemples de réalisation décrits précédemment, sans sortir du cadre de l'invention défini par les revendications.

En variante, non représentée, les première, deuxième et troisième étapes de sélection E100, E120, E140 peuvent être mises en œuvre au travers d'une seule et même étape regroupant celles-ci, au lieu de trois étapes distinctes. Dans ce cas, un ensemble comprenant un actionneur électromécanique 11, un panneau photovoltaïque 25 et une batterie 24 est sélectionné. Cette étape de sélection de l'ensemble est mise en œuvre, notamment, par un choix parmi une liste d'ensembles ou par une entrée, autrement dit une saisie, d'un identifiant de l'ensemble. Avantageusement, le procédé comprend une étape d'enregistrement de l'ensemble sélectionné dans une mémoire du contrôleur 35 du terminal mobile 33.

En variante, non représentée, la sous-étape de superposition E204 peut être mise en œuvre selon un processus différent. Dans un tel cas, le procédé comprend, préalablement à la sous-étape de superposition E204, une sous-étape de détermination du diagramme de parcours solaires D dans le repère sphérique de voute de céleste. Ensuite, la sous-étape de superposition E204 comprend une première sous-étape de passage de données du diagramme de parcours solaires D du repère sphérique de voute céleste au repère tridimensionnel centré sur le point focal de l'objectif de l'appareil photographique 37 du terminal mobile 33, pouvant également être appelé premier repère tridimensionnel. La sous-étape de superposition E204 comprend une deuxième sous-étape de passage du résultat de la première sous-étape de la sous-étape de superposition E204 au repère tridimensionnel centré sur un point milieu du capteur d'image de l'appareil photographique 37 du terminal mobile 33, pouvant également être appelé deuxième repère tridimensionnel. En outre, la sous-étape de superposition E204 comprend une troisième sous-étape de transfert des données de la photographie P, prise lors de l'étape de prise E190, sur le diagramme de parcours solaires D déterminé préalablement, dans le repère tridimensionnel centré sur un point milieu du capteur d'image de l'appareil photographique 37 du terminal mobile 33, également appelé repère commun et pouvant être également appelé repère cardinal. La deuxième sous-étape de la sous-étape de superposition E204 nécessite préalablement une sous-étape d'entrée et une sous-étape de mémorisation par le contrôleur 35 du terminal mobile 33 de la distance focale de l'objectif de l'appareil photographique 37 du terminal mobile 33 et des dimensions du capteur d'image de l'appareil photographique 37 du terminal mobile 33. Dans ce cas, la sous-étape de superposition E204, en particulier les première et deuxième sous-étapes de la sous-étape de superposition E204, sont mises en œuvre en fonction de la distance focale d'un objectif de l'appareil photographique 37 du terminal mobile 33 et/ou des dimensions du capteur d'image de l'appareil photographique 37 du terminal mobile 33.

En variante, non représentée, afin d'améliorer la détermination de la zone de ciel C, lors de la première sous-étape de détermination E201, à partir de la photographie P, prise lors de l'étape de prise E190, l'étape de prise E190 comprend une sous-étape d'optimisation d'au moins un paramètre de prise de la photographie P et, plus particulièrement, de l'appareil photographique 37 du terminal mobile 33. Le ou les paramètres de prise de la photographie P peuvent être, par exemple, le contraste ou la balance des blancs de la photographie P. Avantageusement, la sous-étape d'optimisation peut comprendre, par exemple, une première sous-étape de prise d'une photographie de test et une deuxième sous-étape de détermination d'au moins un paramètre optimum de prise de la photographie P, à partir de la photographie de test. Avantageusement, la sous-étape d'optimisation est mise en œuvre suite à l'étape de positionnement E180. Ainsi, la photographie P est prise, lors de l'étape de prise E190, en appliquant le ou les paramètres optimums déterminés lors de la sous-étape d'optimisation.

Dans une autre variante, non représentée, afin d'améliorer la détermination de la zone de ciel C, lors de la première sous-étape de détermination E201, à partir de la photographie P, prise lors de l'étape de prise E190, la troisième étape de détermination E200 peut comprendre une sous-étape de positionnement d'un curseur sur le ou l'un des éléments d'affichage 34 du terminal mobile 33, en particulier un écran tactile du terminal mobile 33, au niveau d'une zone du ciel C visible sur la photographie P, par l'intermédiaire du ou de l'un des éléments de sélection 14 du terminal mobile 33.

En variante, non représentée, le procédé comprend, en outre, une quatrième étape de détermination de données météorologiques, de sorte à estimer un rayonnement solaire au niveau de l'emplacement F du panneau photovoltaïque 25 par rapport à l'installation 100. Avantageusement, les données météorologiques peuvent être déterminées au moyen d'une communication du deuxième module de communication 36 du terminal mobile 33 avec le serveur 28. Ces données météorologiques peuvent être mémorisées dans une mémoire du contrôleur 35 du terminal mobile 33 ou du serveur 28. Avantageusement, de telles données météorologiques constituent un historique au niveau de l'emplacement F du panneau photovoltaïque 25 par rapport à l'installation 100, en particulier en termes de rayonnement solaire et de température, de sorte à vérifier la compatibilité du dispositif d'entraînement motorisé 5 pour l'installation 100.

En variante, non représentée, l'actionneur électromécanique 11 est inséré dans un rail, en particulier de section carrée ou rectangulaire, pouvant être ouvert à l'une ou à ses deux extrémités, en particulier dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2.

En outre, les modes de réalisation et variantes envisagés peuvent être combinés pour générer de nouveaux modes de réalisation de l'invention, sans sortir du cadre de l'invention défini par les revendications.

Sur la figure 4 et dans la description associée à cette figure, les différentes étapes du procédé de vérification de compatibilité sont présentées dans un certain ordre. Cet ordre est un exemple et de nombreux autres enchaînements d'étapes ordonnées de manières différentes définissant autant de variantes peuvent être mis en œuvre. La seule limite réside dans le fait que certaines étapes doivent être ordonnées chronologiquement lorsqu'une deuxième étape exploite le résultat d'une première étape.

## Revendications

1. Procédé de vérification de compatibilité d'un dispositif d'entraînement motorisé (5) d'un dispositif d'occultation (3) pour une installation (100) de fermeture, d'occultation ou de protection solaire,
l'installation (100) comprenant au moins :
- un bâtiment (B), le bâtiment (B) comprenant au moins un mur (W), le mur (W) comprenant au moins une ouverture (1), une face extérieure (Wext) et une face intérieure, la face extérieure (Wext) du mur (W) étant orientée vers l'extérieur du bâtiment (B),
- une fenêtre (40), la fenêtre (40) étant logée à l'intérieur de l'ouverture (1) du mur (W), et
- le dispositif d'occultation (3),
le dispositif d'occultation (3) comprenant au moins :
- un coffre (9), le coffre (9) comprenant une face supérieure (9a), une face inférieure (9b), un premier côté (9c), un deuxième côté (9d), une face avant (9e) et une face arrière (9f), le deuxième côté (9d) étant opposé au premier côté (9c) selon une direction longitudinale (A9) du coffre (9), la face avant (9e) du coffre (9) étant orientée vers l'extérieur du bâtiment (B), et
- un écran (2), l'écran (2) étant configuré pour être disposé en vis-à-vis de la fenêtre (40), de sorte à obturer partiellement ou complètement l'ouverture (1) ménagée dans le mur (W),
le procédé étant mis en œuvre au moyen d'un terminal mobile (33) et comprenant au moins :
- une première étape de sélection (E100) d'un actionneur électromécanique (11),
- une deuxième étape de sélection (E120) d'un panneau photovoltaïque (25),
- une troisième étape de sélection (E140) d'une batterie (24), et
- une première étape de détermination (E160) d'une localisation géographique de l'installation (100),
**caractérisé**
**en ce que** le procédé comprend, en outre, au moins :
- une deuxième étape de détermination (E170) d'un emplacement (F) du panneau photovoltaïque (25) par rapport à l'ouverture (1) du mur (W) du bâtiment (B) et par rapport à la face extérieure (Wext) du mur (W) du bâtiment (B), la face extérieure (Wext) du mur (W) du bâtiment (B) étant prévue pour intégrer ou recevoir une modification (T) du bâtiment (B),
- une troisième étape de détermination (E200) d'un masque solaire (M), au moyen d'un contrôleur (35) du terminal mobile (33), pour l'emplacement (F) du panneau photovoltaïque (25) par rapport à l'ouverture (1) du mur (W) du bâtiment (B), le masque solaire (M) prenant en considération la modification (T) du bâtiment (B), et
- une phase de vérification (U) de compatibilité du dispositif d'entraînement motorisé (5), au cours de laquelle au moins les première, deuxième et troisième étapes de sélection (E100, E120, E140) et les première, deuxième et troisième étapes de détermination (E160, E170, E200) sont exploitées, la vérification de compatibilité du dispositif d'entraînement motorisé (5) étant mise en œuvre en prenant en considération la modification (T) du bâtiment (B),
**en ce que**, suite à la phase de vérification (U),
- si le résultat de la vérification de compatibilité est positif, alors le procédé comprend une première étape d'information (I1) selon laquelle le dispositif d'entraînement motorisé (5) est apte à être intégré et être mis en service dans l'installation (100) avec la présence de la modification (T) du bâtiment (B),
- tandis que, si le résultat de la vérification de compatibilité est négatif, alors le procédé comprend :
- une deuxième étape d'information (I2) selon laquelle le panneau photovoltaïque (25) est à déplacer par rapport à l'ouverture (1) du mur (W) du bâtiment (B), pour intégrer et mettre en service le dispositif d'entraînement motorisé (5) dans l'installation (100) avec la présence de la modification (T) du bâtiment (B), ou
- une troisième étape d'information (I3) selon laquelle le dispositif d'entraînement motorisé (5) est considéré comme non compatible pour l'installation (100) avec la présence de la modification (T) du bâtiment (B) ou une recharge de la batterie (24) est à prévoir au cours de l'année, au moyen d'une source d'alimentation en énergie électrique externe, distincte du panneau photovoltaïque (25).

2. Procédé de vérification de compatibilité d'un dispositif d'entraînement motorisé (5) d'un dispositif d'occultation (3) pour une installation (100) de fermeture, d'occultation ou de protection solaire selon la revendication 1, **caractérisé en ce que** la modification (T) du bâtiment (B) est un ajout d'une isolation thermique extérieure au niveau de la face extérieure (Wext) du mur (W) du bâtiment (B), en la posant contre la face extérieure (Wext) du mur (W) du bâtiment (W), ou un ajout d'un balcon, d'une avancée ou d'un store d'extérieur contre la face extérieure (Wext) du mur (W) du bâtiment (B).

3. Procédé de vérification de compatibilité d'un dispositif d'entraînement motorisé (5) d'un dispositif d'occultation (3) pour une installation (100) de fermeture, d'occultation ou de protection solaire selon la revendication 1 ou selon la revendication 2, l'ouverture (1) du mur (W) comprenant un côté supérieur (1a), un côté inférieur (1b), un premier côté latéral (1c) et un deuxième côté latéral (1d), le panneau photovoltaïque (25) comprenant un bord supérieur (25a), un bord inférieur (25b), un premier côté (25c), un deuxième côté (25d), une face avant (25e) et une face arrière, la face avant (25e) du panneau photovoltaïque (25) étant orientée vers l'extérieur du bâtiment (B), **caractérisé en ce que** la deuxième étape de détermination (E170) comprend au moins :
- une première sous-étape de sélection (E171) de l'emplacement (F) du panneau photovoltaïque (25) à proximité du premier côté (9c) ou du deuxième côté (9d) du coffre (9),
- une première sous-étape d'entrée (E173) d'une première distance (D1) du bord supérieur (25a) du panneau photovoltaïque (25) par rapport au côté supérieur (1a) de l'ouverture (1) du mur (W),
- une deuxième sous-étape d'entrée (E175) d'une deuxième distance (D2) du premier côté (25c) ou du deuxième côté (25d) du panneau photovoltaïque (25) par rapport au premier côté latéral (1c) ou au deuxième côté latéral (1d) de l'ouverture (1) du mur (W), en fonction de l'emplacement (F) du panneau photovoltaïque (25) à proximité du premier côté (9c) ou du deuxième côté (9d) du coffre (9) déterminé, lors de la première sous-étape de sélection (E171), et
- une troisième sous-étape d'entrée (E177) d'une troisième distance (D3) entre la face avant (25e) du panneau photovoltaïque (25) et une extrémité de la modification (T) du bâtiment (B) la plus éloignée de la face avant (25e) du panneau photovoltaïque (25) selon une direction horizontale.

4. Procédé de vérification de compatibilité d'un dispositif d'entraînement motorisé (5) d'un dispositif d'occultation (3) pour une installation (100) de fermeture, d'occultation ou de protection solaire selon l'une quelconque des revendications 1 à 3, **caractérisé en ce que** le procédé comprend, en outre, au moins :
- une étape de positionnement (E180) du terminal mobile (33) à l'emplacement (F) du panneau photovoltaïque (25) par rapport à l'ouverture (1) du mur (W) du bâtiment (B), et
- suite à l'étape de positionnement (E180), une étape de prise (E190) d'au moins une photographie (P), au moyen d'un appareil photographique (37) du terminal mobile (33),
et **en ce que** l'étape de positionnement (E180) et l'étape de prise (E190) sont mises en œuvre préalablement à la troisième étape de détermination (E200).

5. Procédé de vérification de compatibilité d'un dispositif d'entraînement motorisé (5) d'un dispositif d'occultation (3) pour une installation (100) de fermeture, d'occultation ou de protection solaire selon la revendication 4, **caractérisé en ce que** le procédé comprend, en outre, suite à l'étape de positionnement (E180) et préalablement à l'étape de prise (E190), une première étape d'affichage (E210) de la modification (T) du bâtiment (B) par simulation sur un élément d'affichage (34) du terminal mobile (33).

6. Procédé de vérification de compatibilité d'un dispositif d'entraînement motorisé (5) d'un dispositif d'occultation (3) pour une installation (100) de fermeture, d'occultation ou de protection solaire selon la revendication 4 ou selon la revendication 5, **caractérisé en ce que** le procédé comprend, en outre, suite à l'étape de prise (E190), une deuxième étape d'affichage (E220) de la photographie (P) et de la modification (T) du bâtiment (B) par simulation sur un élément d'affichage (34) du terminal mobile (33), la modification (T) du bâtiment (B) étant superposée sur la photographie (P).

7. Procédé de vérification de compatibilité d'un dispositif d'entraînement motorisé (5) d'un dispositif d'occultation (3) pour une installation (100) de fermeture, d'occultation ou de protection solaire selon l'une quelconque des revendications 4 à 6, **caractérisé en ce que** l'étape de prise (E190) de la photographie (P) comprend une sous-étape de détermination (E191) d'une orientation de l'appareil photographique (37) du terminal mobile (33), au moyen d'un dispositif de détection d'orientation (38) et du contrôleur (35) du terminal mobile (33).

8. Procédé de vérification de compatibilité d'un dispositif d'entraînement motorisé (5) d'un dispositif d'occultation (3) pour une installation (100) de fermeture, d'occultation ou de protection solaire selon l'une quelconque des revendications 4 à 7, **caractérisé en ce que** la troisième étape de détermination (E200) comprend une sous-étape de superposition (E204) de données de la photographie (P, Pp), prise lors de l'étape de prise (E190), sur un diagramme de parcours solaires (D), dans un repère (R, V).

9. Procédé de vérification de compatibilité d'un dispositif d'entraînement motorisé (5) d'un dispositif d'occultation (3) pour une installation (100) de fermeture, d'occultation ou de protection solaire selon la revendication 8, **caractérisé**
**en ce que** la troisième étape de détermination (E200) comprend, en outre, préalablement à la sous-étape de superposition (E204), une sous-étape de projection (E203) de données de la photographie (P), prise lors de l'étape de prise (E190), dans un repère de projection (U),
et **en ce que** la sous-étape de superposition (E204) est mise en œuvre à partir de données de la photographie (Pp), projetée lors de la sous-étape de projection (E203), sur le diagramme de parcours solaires (D).

10. Terminal mobile (33) comprenant des éléments (14, 34, 35, 36, 37, 38, 39) matériels et logiciels configurés pour mettre en œuvre le procédé de vérification de compatibilité d'un dispositif d'entraînement motorisé (5) d'un dispositif d'occultation (3) pour une installation (100) de fermeture, d'occultation ou de protection solaire selon l'une quelconque des revendications 1 à 9.

## Patentansprüche

1. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100),
wobei die Anlage (100) mindestens umfasst:
- ein Gebäude (B), wobei das Gebäude (B) mindestens eine Mauer (W) umfasst, wobei die Mauer (W) mindestens eine Öffnung (1), eine Außenfläche (Wext) und eine Innenfläche umfasst, wobei die Außenfläche (Wext) der Mauer (W) nach außerhalb des Gebäudes (B) gerichtet ist,
- ein Fenster (40), wobei das Fenster (40) im Inneren der Öffnung (1) der Mauer (W) aufgenommen ist, und
- die Verdunkelungsvorrichtung (3),
wobei die Verdunkelungsvorrichtung (3) mindestens umfasst:
- einen Kasten (9), wobei der Kasten (9) eine obere Fläche (9a), eine untere Fläche (9b), eine erste Seite (9c), eine zweite Seite (9d), eine vordere Fläche (9e) und eine hintere Fläche (9f) umfasst, wobei die zweite Seite (9d) zu der ersten Seite (9c) entlang einer Längsrichtung (A9) des Kastens (9) entgegengesetzt ist, wobei die vordere Fläche (9e) des Kastens (9) nach außerhalb des Gebäudes (B) gerichtet ist, und
- einen Behang (2), wobei der Behang (2) dazu ausgestaltet ist, gegenüber dem Fenster (40) angeordnet zu sein, so dass er die in der Mauer (W) ausgebildete Öffnung (1) teilweise oder vollständig verdunkeln kann,
wobei das Verfahren mittels eines mobilen Endgeräts (33) durchgeführt wird und mindestens umfasst:
- einen ersten Schritt des Auswählens (E100) eines elektromechanischen Aktors (11),
- einen zweiten Schritt des Auswählens (E120) eines Solarmoduls (25),
- einen dritten Schritt des Auswählens (E140) einer Batterie (24), und
- einen ersten Schritt des Ermittelns (E160) eines geografischen Standorts der Anlage (100),
**dadurch gekennzeichnet,**
**dass** das Verfahren ferner mindestens umfasst:
- einen zweiten Schritt des Ermittelns (E170) einer Position (F) des Solarmoduls (25) in Bezug auf die Öffnung (1) der Mauer (W) des Gebäudes und in Bezug auf die Außenfläche (Wext) der Mauer (W) des Gebäudes (B), wobei die Außenfläche (Wext) der Mauer (W) des Gebäudes (B) dazu vorgesehen ist, eine Änderung (T) des Gebäudes (T) zu integrieren oder aufzunehmen,
- eine dritte Phase des Ermittelns (E200) einer Sonnenmaske (M), mittels einer Steuerung (35) des mobilen Endgeräts (33), für die Position (F) des Solarmoduls (25) in Bezug auf die Öffnung (1) der Mauer (W) des Gebäudes (B), wobei die Sonnenmaske (M) die Änderung (T) des Gebäudes (B) berücksichtigt, und
- eine Phase zur Kompatibilitätsprüfung (U) der motorisierten Antriebsvorrichtung (5), während der mindestens der erste, zweite und dritte Schritt des Auswählens (E100, E120, E140) und der erste, zweite und dritte Schritt des Ermittelns (E160, E170, E200) verarbeitet werden, wobei die Kompatibilitätsprüfung der motorisierten Antriebsvorrichtung (5) unter Berücksichtigung der Änderung (T) des Gebäudes (B) durchgeführt wird,
**dass** nach der Phase zur Prüfung (U),
- wenn das Ergebnis der Kompatibilitätsprüfung positiv ist, das Verfahren einen ersten Schritt der Information (11) umfasst, gemäß dem die motorisierte Antriebsvorrichtung (5) geeignet ist, bei Vorhandensein der Änderung (T) des Gebäudes (B) in die Anlage (100) integriert und in Betrieb genommen zu werden,
- während, wenn das Ergebnis der Kompatibilitätsprüfung negativ ist, das Verfahren umfasst:
- einen zweiten Schritt der Information (I2), gemäß dem das Solarmodul (25) in Bezug auf die Öffnung (1) der Mauer (W) des Gebäudes (B) zu versetzen ist, um die motorisierte Antriebsvorrichtung (5) bei Vorhandensein der Änderung (T) des Gebäudes (B) in die Anlage (100) zu integrieren und in Betrieb zu nehmen, oder
- einen dritten Schritt der Information (I3), gemäß dem die motorisierte Antriebsvorrichtung (5) als für die Anlage (100) bei Vorhandensein der Änderung (T) des Gebäudes (B) inkompatibel betrachtet wird (B) oder ein Wiederaufladen der Batterie (24) im Laufe des Jahres mittels einer externen Quelle zur Versorgung mit elektrischer Energie, die von dem Solarmodul (25) verschieden ist, vorzusehen ist.

2. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach Anspruch 1, **dadurch gekennzeichnet, dass** die Änderung (T) des Gebäudes (B) ein Hinzufügen einer Außenwärmedämmung an der Außenfläche (Wext) der Mauer (W) des Gebäudes (B) ist, wobei sie gegen die Außenfläche (Wext) der Mauer (W) des Gebäudes (W) gesetzt wird, oder ein Hinzufügen eines Balkons, eines Vorbaus oder einer Markise an der Außenfläche (Wext) der Mauer (W) des Gebäudes (B).

3. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach Anspruch 1 oder nach Anspruch 2, wobei die Öffnung (1) der Mauer (W) eine obere Seite (1a), eine untere Seite (1b), eine erste seitliche Seite (1c) und eine zweite seitliche Seite (1d) umfasst, wobei das Solarmodul (25) einen oberen Rand (25a), einen unteren Rand (25b), eine erste Seite (25c), eine zweite Seite (25d), eine vordere Fläche (25e) und eine hintere Fläche umfasst, wobei die vordere Fläche (25e) des Solarmoduls (25) nach außerhalb des Gebäudes (B) gerichtet ist,
**dadurch gekennzeichnet, dass** der zweite Schritt des Ermittelns (E170) mindestens umfasst:
- einen ersten Teilschritt des Auswählens (E171) der Position (F) des Solarmoduls (25) in der Nähe der ersten Seite (9c) oder der zweiten Seite (9d) des Kastens (9),
- einen ersten Teilschritt des Eingebens (E173) eines ersten Abstands (D1) des oberen Randes (25a) des Solarmoduls (25) in Bezug auf die obere Seite (1a) der Öffnung (1) der Mauer (W),
- einen zweiten Teilschritt des Eingebens (E175) eines zweiten Abstands (D2) der ersten Seite (25c) oder der zweiten Seite (25d) des Solarmoduls (25) in Bezug auf die erste seitliche Seite (1c) oder auf die zweite seitliche Seite (1d) der Öffnung (1) der Mauer (W), in Abhängigkeit von der Position (F) des Solarmoduls (25) in der Nähe der ersten Seite (9c) oder der zweiten Seite (9d) des Kastens (9), die bei dem ersten Teilschritt des Auswählens (E171) ermittelt wurde, und
- einen dritten Teilschritt des Eingebens (E177) eines dritten Abstands (D3) zwischen der vorderen Fläche (25e) des Solarmoduls (25) und einem Ende der Änderung (T) des Gebäudes (B), das entlang einer horizontalen Richtung am weitesten von der vorderen Fläche (25e) des Solarmoduls (25) entfernt ist.

4. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach einem der Ansprüche 1 bis 3, **dadurch gekennzeichnet, dass** das Verfahren ferner mindestens umfasst:
- einen Schritt des Positionierens (E180) des mobilen Endgeräts (33) an der Position (F) des Solarmoduls (25) in Bezug auf die Öffnung (1) der Mauer (W) des Gebäudes (B), und
- nach dem Schritt des Positionierens (E180), einen Schritt des Aufnehmens (E190) mindestens eines Fotos (P) mittels des Fotoapparats (37) des mobilen Endgeräts (33), und dadurch, dass der Schritt des Positionierens (E180) und der Schritt des Aufnehmens (E190) vor dem dritten Schritt des Ermittelns (E200) durchgeführt werden.

5. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach Anspruch 4, **dadurch gekennzeichnet, dass** das Verfahren ferner, nach dem Schritt des Positionierens (E180) und vor dem Schritt des Aufnehmens (E190), einen ersten Schritt des Anzeigens (E210) der Änderung (T) des Gebäudes (B) durch Simulation auf einem Anzeigeelement (34) des mobilen Endgeräts (33) umfasst.

6. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach Anspruch 4 oder nach Anspruch 5, **dadurch gekennzeichnet, dass** das Verfahren ferner, nach dem Schritt des Aufnehmens (E190), einen zweiten Schritt des Anzeigens (E220) des Fotos (P) und der Änderung (T) des Gebäudes (B) durch Simulation auf einem Anzeigeelement (34) des mobilen Endgeräts (33) umfasst, wobei die Änderung (T) des Gebäudes dem Foto (P) überlagert ist.

7. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach einem der Ansprüche 4 bis 6, **dadurch gekennzeichnet, dass** der Schritt des Aufnehmens (E190) des Fotos (P) einen Teilschritt des Ermittelns (E191) einer Ausrichtung des Fotoapparats (37) des mobilen Endgeräts (33) mittels einer Ausrichtungserkennungsvorrichtung (38) und der Steuerung (35) des mobilen Endgeräts (33) umfasst.

8. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach einem der Ansprüche 4 bis 7, **dadurch gekennzeichnet, dass** der dritte Schritt des Ermittelns (E200) einen Teilschritt des Überlagerns (E204) von Daten des Fotos (P, Pp), das bei dem Schritt des Aufnehmens (E190) aufgenommen wurde, über ein Diagramm mit Sonnenverläufen (D) in einem Koordinatensystem (R, V) umfasst.

9. Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach Anspruch 8, **dadurch gekennzeichnet,**
**dass** der dritte Schritt des Ermittelns (E200) ferner, vor dem Teilschritt des Überlagerns (E204), einen Teilschritt des Projizierens (E203) von Daten des Fotos (P), das bei dem Schritt des Aufnehmens (E190) aufgenommen wurde, in ein Projektionskoordinatensystem (U) umfasst,
und **dass** der Teilschritt des Überlagerns (E204) ausgehend von Daten des bei dem Teilschritt des Projizierens (E203) auf das Diagramm mit Sonnenverläufen (D) projizierten Fotos (Pp) durchgeführt wird.

10. Mobiles Endgerät (33), umfassend Hardware- und Software-Elemente (14, 34, 35, 36, 37, 38, 39), die dazu ausgestaltet sind, das Verfahren zur Kompatibilitätsprüfung einer motorisierten Antriebsvorrichtung (5) einer Verdunkelungsvorrichtung (3) für eine Schließ-, Verdunkelungs- oder Sonnenschutzanlage (100) nach einem der Ansprüche 1 bis 9 durchzuführen.

## Claims

1. Method for checking compatibility of a motorized driving device (5) of a covering device (3) for a closing, covering or solar protection installation (100),
the installation (100) comprising at least:
- a building (B), the building (B) comprising at least one wall (W), the wall (W) comprising at least one opening (1), an outer face (Wext) and an inner face, the outer face (Wext) of the wall (W) being oriented towards the exterior of the building (B),
- a window (40), the window (40) being housed inside the opening (1) of the wall (W), and
- the covering device (3),
the covering device (3) comprising at least:
- a box (9), the box (9) comprising an upper face (9a), a lower face (9b), a first side (9c), a second side (9d), a front face (9e) and a rear face (9f), the second side (9d) being on the opposite side from the first side (9c) in a longitudinal direction (A9) of the box (9), the front face (9e) of the box (9) being oriented towards the exterior of the building (B), and
- a screen (2), the screen (2) being configured to be arranged facing the window (40), so as to partially or completely cover the opening (1) provided in the wall (W),
the method being carried out by means of a mobile terminal (33) and comprising at least:
- a first step (E100) of selecting an electromechanical actuator (11),
- a second step (E120) of selecting a photovoltaic panel (25),
- a third step (E140) of selecting a battery (24), and
- a first step (E160) of determining a geographical location of the installation (100),
**characterized**
**in that** the method further comprises at least:
- a second step (E170) of determining a location (F) of the photovoltaic panel (25) with respect to the opening (1) of the wall (W) of the building (B) and with respect to the outer face (Wext) of the wall (W) of the building (B), the outer face (Wext) of the wall (W) of the building (B) being intended to incorporate or receive a modification (T) of the building (B),
- a third step (E200) of determining a solar mask (M), by means of a controller (35) of the mobile terminal (33), for the location (F) of the photovoltaic panel (25) with respect to the opening (1) of the wall (W) of the building (B), the solar mask (M) taking account of the modification (T) of the building (B), and
- a phase (U) of checking compatibility of the motorized driving device (5), during which at least the first, second and third selection steps (E100, E120, E140) and the first, second and third determination steps (E160, E170, E200) are run, the compatibility check of the motorized driving device (5) being carried out taking account the modification (T) of the building (B),
**in that**, subsequent to the checking phase (U),
- if the result of the compatibility check is positive, then the method comprises a first information step (I1) according to which the motorized driving device (5) is able to be incorporated and put into service in the installation (100) with the presence of the modification (T) of the building (B),
- whereas, if the result of the compatibility check is negative, then the method comprises:
- a second information step (I2) according to which the photovoltaic panel (25) is to be moved with respect to the opening (1) of the wall (W) of the building (B), in order for the motorized driving device (5) to be incorporated and put into service in the installation (100) with the presence of the modification (T) of the building (B), or
- a third information step (I3) according to which the motorized driving device (5) is considered to be incompatible for the installation (100) with the presence of the modification (T) of the building (B) or a recharge of the battery (24) is to be expected during the course of the year, by means of an external electrical power supply source, distinct from the photovoltaic panel (25).

2. Method for checking compatibility of a motorized driving device (5) of a covering device (3) for a closing, covering or solar protection installation (100) according to claim 1, **characterized in that** the modification (T) of the building (B) is an addition of external thermal insulation to the outer face (Wext) of the wall (W) of the building (B), by placing it against the outer face (Wext) of the wall (W) of the building (W), or an addition of a balcony, of a projection or of an external awning against the outer face (Wext) of the wall (W) of the building (B).

3. Method for checking compatibility of a motorized driving device (5) of a covering device (3) for a closing, covering or solar protection installation (100) according to claim 1 or according to claim 2, the opening (1) of the wall (W) comprising an upper side (1a), a lower side (1b), a first lateral side (1c) and a second lateral side (1d), the photovoltaic panel (25) comprising an upper edge (25a), a lower edge (25b), a first side (25c), a second side (25d), a front face (25e) and a rear face, the front face (25e) of the photovoltaic panel (25) being oriented towards the exterior of the building (B), **characterized in that** the second determination step (E170) comprises at least:
- a first sub-step (E171) of selecting the location (F) of the photovoltaic panel (25) near the first side (9c) or the second side (9d) of the box (9),
- a first sub-step (E173) of inputting a first distance (D1) between the upper edge (25a) of the photovoltaic panel (25) and the upper side (1a) of the opening (1) of the wall (W),
- a second sub-step (E175) of inputting a second distance (D2) between the first side (25c) or the second side (25d) of the photovoltaic panel (25) and the first lateral side (1c) or the second lateral side (1d) of the opening (1) of the wall (W), in dependence on the location (F) of the photovoltaic panel (25) near the first side (9c) or the second side (9d) of the box (9) determined, in the first selection sub-step (E171), and
- a third sub-step (E177) of inputting a third distance (D3) between the front face (25e) of the photovoltaic panel (25) and an end of the modification (T) of the building (B) that is farthest away from the front face (25e) of the photovoltaic panel (25) in a horizontal direction.

4. Method for checking compatibility of a motorized driving device (5) of a covering device (3) for a closing, covering or solar protection installation (100) according to any one of claims 1 to 3, **characterized in that** the method further comprises at least:
- a step (E180) of positioning the mobile terminal (33) at the location (F) of the photovoltaic panel (25) with respect to the opening (1) of the wall (W) of the building (B), and
- subsequent to the positioning step (E180), a step (E190) of capturing at least one photograph (P), by means of a photographic device (37) of the mobile terminal (33),
and **in that** the positioning step (E180) and the capture step (E190) are carried out prior to the third determination step (E200).

5. Method for checking compatibility of a motorized driving device (5) of a covering device (3) for a closing, covering or solar protection installation (100) according to claim 4, **characterized in that** the method further comprises, subsequent to the positioning step (E180) and prior to the capture step (E190), a first step (E210) of displaying the modification (T) of the building (B) by simulation on a display element (34) of the mobile terminal (33).

6. Method for checking compatibility of a motorized driving device (5) of a covering device (3) for a closing, covering or solar protection installation (100) according to claim 4 or according to claim 5, **characterized in that** the method further comprises, subsequent to the capture step (E190), a second step (E220) of displaying the photograph (P) and the modification (T) of the building (B) by simulation on a display element (34) of the mobile terminal (33), the modification (T) of the building (B) being superposed on the photograph (P).

7. Method for checking compatibility of a motorized driving device (5) of a covering device (3) for a closing, covering or solar protection installation (100) according to any one of claims 4 to 6, **characterized in that** the step (E190) of capturing the photograph (P) comprises a sub-step (E191) of determining an orientation of the photographic device (37) of the mobile terminal (33), by means of an orientation detection device (38) and the controller (35) of the mobile terminal (33).

8. Method for checking compatibility of a motorized driving device (5) of a covering device (3) for a closing, covering or solar protection installation (100) according to any one of claims 4 to 7, **characterized in that** the third determination step (E200) comprises a sub-step (E204) of superposing data from the photograph (P, Pp), captured in the capture step (E190), on a solar path diagram (D), in a frame of reference (R, V).

9. Method for checking compatibility of a motorized driving device (5) of a covering device (3) for a closing, covering or solar protection installation (100) according to claim 8, **characterized**
**in that** the third determination step (E200) further comprises, prior to the superposition sub-step (E204), a sub-step (E203) of projecting data from the photograph (P), captured in the capture step (E190), into a projection frame of reference (U),
and **in that** the superposition sub-step (E204) is carried out on the basis of data from the photograph (Pp), projected in the projection sub-step (E203), on the solar path diagram (D).

10. Mobile terminal (33) comprising hardware and software elements (14, 34, 35, 36, 37, 38, 39) configured to carry out the method for checking compatibility of a motorized driving device (5) of a covering device (3) for a closing, covering or solar protection installation (100) according to any one of claims 1 to 9.
